(19) Europäisches Patentamt
European Patent Office
Office européen des brevets

(11) EP 4 261 243 A1

(12) # EUROPEAN PATENT APPLICATION

published in accordance with Art. 153(4) EPC

(43) Date of publication:
**18.10.2023 Bulletin 2023/42**

(21) Application number: **20957844.2**

(22) Date of filing: **15.12.2020**

(51) International Patent Classification (IPC):
***C08G 73/00*** *(2006.01)* ***C08G 73/06*** *(2006.01)*
***B02C 21/00*** *(2006.01)* ***C08F 8/06*** *(2006.01)*
***B01F 33/00*** *(2022.01)* ***B01F 33/70*** *(2022.01)*
***C08F 8/02*** *(2006.01)* ***B02C 23/06*** *(2006.01)*
***C08F 4/00*** *(2006.01)* ***C08G 73/02*** *(2006.01)*

(52) Cooperative Patent Classification (CPC):
**B02C 21/00; B02C 23/06; C08F 4/00; C08F 8/02; C08F 8/06; C08G 73/00; C08G 73/02; C08G 73/06**

(86) International application number:
**PCT/RU2020/000692**

(87) International publication number:
**WO 2022/081040 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.10.2020 RU 2020133714**

(71) Applicant: **Limited Liability Company "NPO Petrovax Pharm"**
**g. Podolsk Moskovskaya obl., 142143 (RU)**

(72) Inventor: **TITENOK, Konstantin Viktorovich**
**Moskovskaya obl., 142143 (RU)**

(74) Representative: **von Füner, Nicolai et al**
**Von Füner Ebbinghaus Finck Hano**
**Patentanwälte**
**Mariahilfplatz 3**
**81541 München (DE)**

(54) **METHOD FOR SYNTHESIZING POLY-1,4-ETHYLENEPIPERAZINE AND A COPOLYMER OF N-OXIDIZED 1,4-ETHYLENEPIPERAZINE AND (N-CARBOXYMETHYL)-1,4-ETHYLENEPIPERAZINIUM BROMIDE AND THEIR DERIVATIVES**

(57) The invention relates to the field of chemistry and technology for the organic synthesis of high molecular weight compounds, and more particularly to a polymerization reactor and to methods for producing high purity poly-1,4-ethylenepiperazine (PEP) and its derivatives with a narrow molecular weight distribution, and also to methods for producing a copolymer of N-oxidized 1,4-ethylenepiperazine and (N-carboxymethyl)-1,4-ethylenepiperazinium bromide and its derivatives, as well as to the products obtained using said methods. The products of the proposed methods, in particular, a copolymer of N-oxidized 1,4-ethylenepiperazine and (N-carboxymethyl)-1,4-ethylenepiperazinium bromide (with two units) and a copolymer of N-oxidized 1,4-ethylenepiperazine, (N-carboxymethyl)-1,4-ethylenepiperazinium bromide and 1,4-ethylenepiperazine, the structure of which contains a third unit with unsubstituted nitrogen atoms, are more stable throughout their entire shelf life, exhibit improved pharmacological properties by comparison with a copolymer produced using prior art technology, and can be used as a conjugate platform for creating prolonged-release drugs based on therapeutic proteins (cytokines, enzymes, hormones, growth factors, monoclonal antibodies). They can also be used as an adjuvant in different vaccines and for producing conjugates and complexes with antigens for boosting immune response.

EP 4 261 243 A1

## Description

### TECHNICAL FIELD OF THE INVENTION

The invention relates to the field of chemistry and technology of organic synthesis of high-molecular compounds, in particular a polymerization reactor, methods of producing high-purity poly-1,4-ethylenepiperazine (PEP) and derivatives thereof with a narrow molecular weight distribution, as well as methods of producing a copolymer of N-oxide of 1,4-ethylenepiperazine and (N-carboxymethyl)-1,4-ethylenepiperazinium bromide and derivatives thereof, and products obtained by said methods.

### PRIOR ART

A method is known for producing poly-1,4-ethylenepiperazine (PEP), described in patent No. 2185388. The known method envisages preliminary purification of TED monomer in a sublimator at a temperature from 100°C to 120°C and a vacuum of $5 \cdot 10^{-3}$ mbar, deaeration of the reaction mixture in vacuum conditions with temperature variation from -196°C to 150°C followed by polymerization in glass vials at a temperature of 190-210°C for 24 hours; then comminution of the rods (PEP) on a lathe and purification of the polymer to remove low-molecular impurities with hot purified water.

That method of synthesis requires an additional protracted energy-consuming stage of preliminary purification of triethylene diamine monomer (TED) by sublimation under vacuum, heating the starting raw material in a sublimator from 100°C to 120°C at vacuum of $5 \cdot 10^{-3}$ mbar, also the technology described does not make it possible to synthesize (PEP) at a yield of more than 92% and achieve a narrow molecular weight distribution, because the vacuum of $5 \cdot 10^{-3}$ mbar does not offer the possibility of completely removing moisture of the air from the reaction mixture and eliminating unwanted reactions. PEP obtained by the known technology requires triple purification to remove monomer that has not undergone the polymerization reaction, with subsequent utilization of production waste. Additionally, with polymerization in glass vials there is still a high risk of breakage of the vial, and with comminution of the polymer on a lathe there is a high risk of the presence of metal swarf, which may lead to side reactions in oxidation of (PEP) and derivatives thereof. Also, with comminution of PEP on a lathe or in a mechanical grinding mill it is not possible to obtain uniform micronized powder with a particle size of less than 300 μm. Furthermore, comminution of (PEP) on a lathe or in a mill, by the method described in patent No. 2185388, introduces a considerable risk of metal swarf getting into the product, and inhomogeneity of comminution of the rods does not allow alkylation of PEP to be carried out in a heterogeneous medium.

A method is known for producing copolymer of N-oxide of 1,4-ethylenepiperazine and (N-carboxymethyl)-1,4-ethylenepiperazinium bromide, described in patent No. 2185388. In accordance with the known method of synthesis of copolymer of N-oxide of 1,4-ethylenepiperazine and (N-carboxymethyl)-1,4-ethylenepiperazinium bromide, poly-1,4-ethylenepiperazine is obtained by oxidation in a heterogeneous medium with subsequent alkylation of the ultrafiltration-purified copolymer of N-oxide of 1,4-ethylenepiperazine and 1,4-ethylenepiperazine in the presence of an alkylating agent.

That method of synthesis is two-stage and requires double purification of the polymer in ultrafiltration equipment; also during synthesis by that method there is a possibility of occurrence of a side reaction of O-alkylation that is characteristic of oxides of amines (Shaker Youssif, in: Recent trends in the chemistry of pyridine N-oxides 2001), with formation of an O-alkylated product, which has adverse effects on the stability of the polymer and its pharmacological properties.

There is an urgent need to increase the safety of the method of producing PEP by preventing breakage of the vials with subsequent ignition of the polymer, to increase product yield while ensuring a narrow molecular weight distribution of the polymer, and to develop a method of producing a stable copolymer of N-oxide of 1,4-ethylenepiperazine and (N-carboxymethyl)-1,4-ethylenepiperazinium bromide and derivatives thereof with improved pharmacological properties.

### BRIEF DESCRIPTION OF THE ESSENCE OF THE INVENTION

A polymerization reactor of conical shape is proposed, comprising a cylinder (1), equipped with a charging flange with grooves for fitting a gasket, the gasket (2), top cover of the reactor (3), screw thread (4), nozzle for connecting the reactor to a vacuum line (5) (Fig. 2). The material used for the reactor is titanium and titanium alloys (for example: titanium grade2, Ti6AL4V), as well as other chemically inert alloys that are used in the chemical industry, for example: KhN65MV. A reactor made of titanium is used in one of the preferred variants.

The use of a polymerization reactor makes it possible to create an ultrahigh vacuum of $1 \cdot 10^{-8}$ mbar and completely remove moisture of the air from the reactor, which ensures elimination of unwanted reactions, leading to a wide distribution of molecular weight and a decrease in yield of the target product (>99.7%) and makes it possible to use micronized PEP without additional purification, and as a result does not require utilization of production waste.

Use of the reactor also makes it possible to carry out polymerization of TED at excess pressure in an atmosphere

of ultrapure inert gases (helium, argon etc.).

Another aspect of the present invention is a method of producing poly-1,4-ethylenepiperazine (PEP), envisaging mixing of TED monomer with a cationic catalyst in a molar ratio of 1:0.0001-0.0005, loading of the reaction mixture obtained in a synthesis reactor and deaeration of the reaction mixture at room temperature and vacuum of $1 \cdot 10^{-8}$ mbar for 30-60 minutes, and carrying out of polymerization, the reactor being placed in an oil bath or in a heating cabinet at a temperature from 215 to 295°C for 3-22 h and then comminution of the rods of poly-1,4-ethylenepiperazine obtained to a homogeneous micronized substance with a particle size of less than 300 μm.

Yet another aspect of the invention is PEP obtained by the method described above with a narrow molecular weight distribution and an average molecular weight (from 20 to 120 kDa) of general formula:

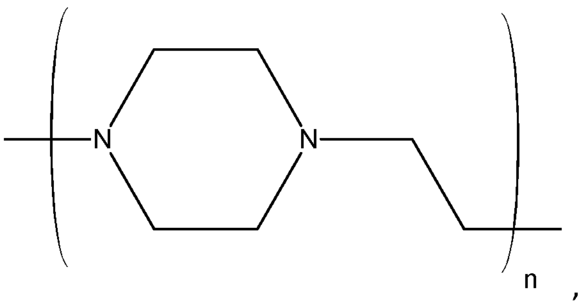

where n is from 180 to 1100

Poly-1,4-ethylenepiperazine is obtained in the form of micronized powder with a particle size of less than 300 μm; the average molecular weight of the polymer is from 20 to 120 kDa.

Yet another aspect of the invention is a method of producing a copolymer of N-oxide of 1,4-ethylenepiperazine and (N-carboxymethyl)-1,4-ethylenepiperazinium bromide, consisting of two structural units, envisaging alkylation of PEP comminuted by the method described above to less than 300 μm in a heterogeneous aqueous or aqueous-organic medium with halogen derivatives of acetic acid or esters thereof with a cyclic or acyclic structure until homogeneity of the polymer solution is obtained at a temperature from 45 to 85°C and a molar ratio of PEP units and alkylating agent equal to 1:0.2-0.5, for 7-12 hours, obtaining, as an intermediate product, an alkylated derivative of PEP (copolymer of (N-carboxymethyl)-1,4-ethylenepiperazinium bromide and 1,4-ethylenepiperazine), addition, to the polymer alkylated by the method stated above, of an aqueous solution of hydrogen peroxide and acetic acid at a temperature of 55-75°C and a molar ratio of the units of alkylated derivative of PEP and hydrogen peroxide equal to 1:0.75-0.95 for 8-12 hours with subsequent purification of the aqueous solution obtained, preferably by ultrafiltration or dialysis to remove low-molecular impurities at pH below 7.

Other compounds, organic or inorganic peroxides and hydroperoxides, salts of oxygen-containing haloacids, for example Caro's acid, are also used as oxidizing agent for carrying out the process of oxidation of the copolymer. For example, hydrogen peroxide is used in one of the preferred variants.

Yet another aspect of the invention is the final product of the claimed method - copolymer of N-oxide of 1,4-ethylenepiperazine and (N-carboxymethyl)-1,4-ethylenepiperazinium bromide, consisting of two structural units, of general formula

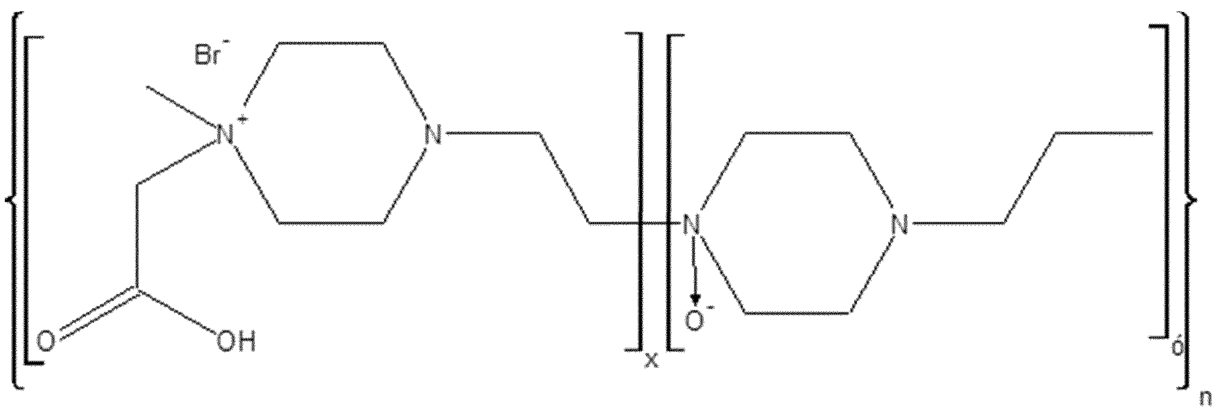

where x=(0.03-0.4); y=(0.6-0.97), n is from 150 to 800.

For the copolymer of N-oxide of 1,4-ethylenepiperazine and (N-carboxymethyl)-1,4-ethylenepiperazinium bromide (with 2 units) obtained by the claimed method, the average molecular weight of the copolymer is from 20 to 120 kDa, the copolymer according to the invention has a narrow molecular weight distribution, in contrast to the copolymer of N-oxide of 1,4-ethylenepiperazine and (N-carboxymethyl)-1,4-ethylenepiperazinium bromide (Example 18, Table 13) obtained by the known technology (patent of the Russian Federation 2185388).

The copolymer of N-oxide of 1,4-ethylenepiperazine and (N-carboxymethyl)-1,4-ethylenepiperazinium bromide (with 2 units) obtained by the claimed method is more stable throughout its shelf life, compared to the known copolymer of N-oxide of 1,4-ethylenepiperazine and (N-carboxymethyl)-1,4-ethylenepiperazinium bromide (Example 14, Table 8), where destruction of the polymer is observed, leading to a decrease in molecular weight and an increase in oligomers. Moreover, the narrower molecular weight distribution provides improved pharmacological properties compared to the copolymer obtained by the known technology, during the shelf life investigated (24 months). (Example 15, Table 12).

Yet another aspect of the invention is a copolymer of (N-carboxymethyl)-1,4-ethylenepiperazinium bromide and 1,4-ethylenepiperazine, an intermediate product of the claimed method of producing a copolymer of N-oxide of 1,4-ethylenepiperazine and (N-carboxymethyl)-1,4-ethylenepiperazinium bromide, which is an alkylated derivative of PEP of general formula

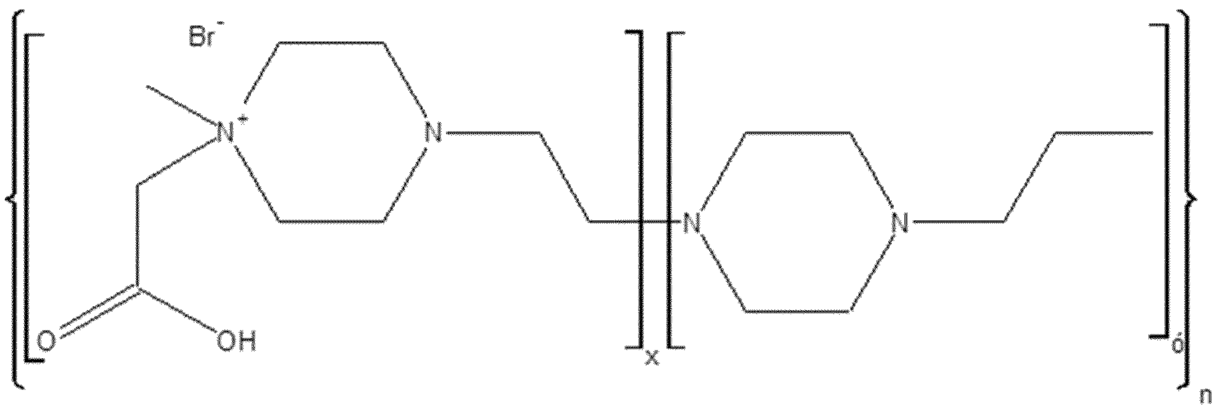

where x=(0.03-0.9); y=(0.1-0.97), n is from 150 to 800.

The average molecular weight of the copolymer is from 20 to 100 kDa.

The alkylated derivative of PEP (copolymer of (N-carboxymethyl)-1,4-ethylenepiperazinium bromide and 1,4-ethylenepiperazine) may be used as a conjugate platform for creating drugs with prolonged action based on therapeutic proteins (cytokines, enzymes, hormones, growth factors, monoclonal antibodies). It is also possible to use the copolymer of (N-carboxymethyl)-1,4-ethylenepiperazinium bromide and 1,4-ethylenepiperazine as an adjuvant in various vaccines and for producing conjugates and complexes with antigens for enhancing the immune response.

Yet another aspect of the invention is a method of producing a copolymer of N-oxide of 1,4-ethylenepiperazine and (N-carboxymethyl)-1,4-ethylenepiperazinium, consisting of two structural units, in the form of a zwitterion, envisaging alkylation of PEP comminuted by the method described above to less than 300 μm in a heterogeneous aqueous or aqueous-organic medium with halogen derivatives of acetic acid or esters thereof with a cyclic or acyclic structure until homogeneity of the polymer solution is obtained at a temperature from 45 to 85°C at a molar ratio of the PEP units and alkylating agent equal to 1:0.2-0.5, for 7-12 hours, obtaining, as an intermediate product, an alkylated derivative of PEP (copolymer of (N-carboxymethyl)-1,4-ethylenepiperazinium bromide and 1,4-ethylenepiperazine), addition, to the polymer alkylated by the method stated above, of an aqueous solution of hydrogen peroxide and acetic acid at a temperature of 55-75°C at a molar ratio of PEP units and hydrogen peroxide equal to 1:0.75-0.95, the oxidation reaction being carried out for 8-12 hours with subsequent purification of the resultant aqueous solution by ultrafiltration or dialysis at pH above 8.

Yet another aspect of the invention is a copolymer of N-oxide of 1,4-ethylenepiperazine and (N-carboxymethyl)-1,4-ethylenepiperazinium, consisting of two structural units, in the form of a zwitterion, obtained by the aforesaid method, of general formula

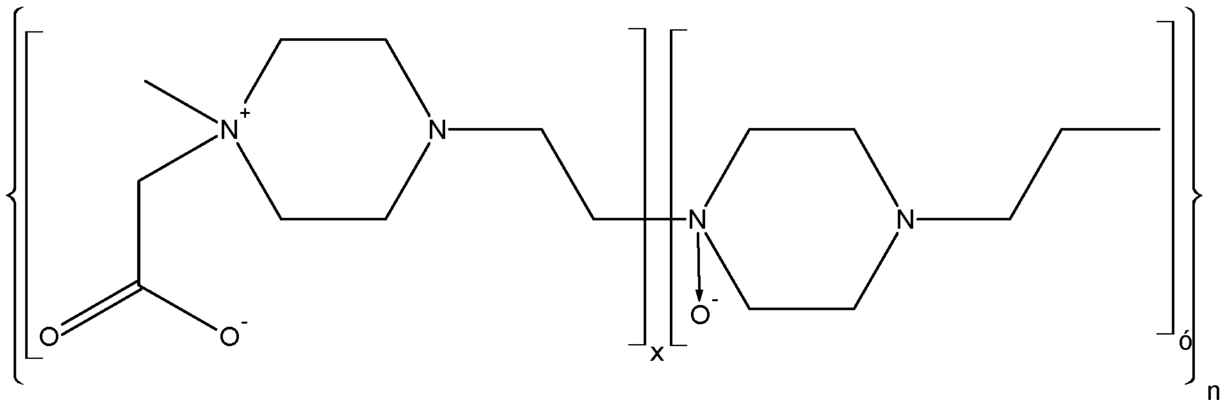

where x=(0.03-0.4); y=(0.6-0.97), n is from 150 to 800; the average molecular weight of the copolymer is 20-120 kDa.

The copolymer of N-oxide of 1,4-ethylenepiperazine and (N-carboxymethyl)-1,4-ethylenepiperazinium in the form of a zwitterion (with 2 units), obtained by the claimed method, is stable throughout the shelf life (24 months) (Example 14, Table 9).

Yet another aspect of the invention is a method of producing a copolymer of N-oxide of 1,4-ethylenepiperazine, (N-carboxymethyl)-1,4-ethylenepiperazinium bromide and 1,4-ethylenepiperazine, which has in its structure a third unit with unsubstituted nitrogen atoms, envisaging alkylation of PEP comminuted by the method described above to less than 300 μm in a heterogeneous aqueous or aqueous-organic medium with halogen derivatives of acetic acid or esters thereof with a cyclic or acyclic structure until homogeneity of the polymer solution is obtained at a temperature from 20 to 40°C at a molar ratio of the PEP units and alkylating agent equal to 1:0.05-0.2, for 2-6 hours, obtaining, as an intermediate product, an alkylated derivative of PEP (copolymer of (N-carboxymethyl)-1,4-ethylenepiperazinium bromide and 1,4-ethylenepiperazine), addition, to the alkylated polymer, of an aqueous solution of hydrogen peroxide and acetic acid at a molar ratio of units of alkylated derivative of PEP : hydrogen peroxide of 1:0.6-0.75 and temperature of 15-50°C, the oxidation reaction being carried out for 4-7 hours with subsequent purification of the aqueous solution obtained, preferably by ultrafiltration or dialysis to remove low-molecular impurities at pH below 7.

Yet another aspect of the invention is a copolymer of N-oxide of 1,4-ethylenepiperazine, (N-carboxymethyl)-1,4-ethylenepiperazinium bromide and 1,4-ethylenepiperazine, which has in its structure a third unit with unsubstituted nitrogen atoms of general formula

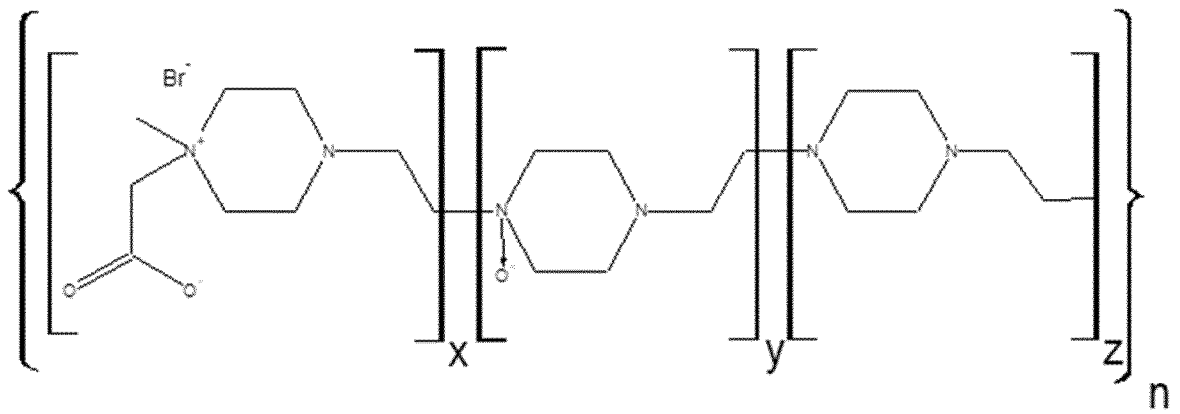

where x=(0.03-0.2); y=(0.6-0.78); z=(0.02-0.63), n is from 150 to 800; the average molecular weight of the copolymer is from 20 to 120 kDa.

The copolymer of N-oxide of 1,4-ethylenepiperazine, (N-carboxymethyl)-1,4-ethylenepiperazinium bromide and 1,4-ethylenepiperazine (with 3 units), obtained by the claimed method, is more stable throughout its shelf life, compared to the known copolymer of N-oxide of 1,4-ethylenepiperazine, (N-carboxymethyl)-1,4-ethylenepiperazinium bromide and 1,4-ethylenepiperazine, where destruction of the polymer is observed during storage, leading to a decrease in molecular weight and an increase in oligomers (Example 14, Table 10). Furthermore, the narrower molecular weight distribution of the copolymer of N-oxide of 1,4-ethylenepiperazine, (N-carboxymethyl)-1,4-ethylenepiperazinium bromide and 1,4-ethylenepiperazine (with 3 units) provides improved pharmacological properties compared to the copolymer of N-oxide of 1,4-ethylenepiperazine and (N-carboxymethyl)-1,4-ethylenepiperazinium bromide, obtained by the known

technology (Example 15, Table 12; Example 18, Table 13).

Yet another aspect of the invention is a method of producing a copolymer of N-oxide of 1,4-ethylenepiperazine, (N-carboxymethyl)-1,4-ethylenepiperazinium and 1,4-ethylenepiperazine, which has in its structure a third unit with unsubstituted nitrogen atoms, in the form of a zwitterion, envisaging alkylation of PEP comminuted by the method described above to less than 300 μm in a heterogeneous aqueous or aqueous-organic medium with halogen derivatives of acetic acid or esters thereof with a cyclic or acyclic structure until homogeneity of the polymer is attained at a temperature from 20 to 40°C and a molar ratio of the PEP units and alkylating agent equal to 1:0.05-0.2, for 2-6 hours, obtaining, as an intermediate product, an alkylated derivative of PEP (copolymer of (N-carboxymethyl)-1,4-ethylenepiperazinium bromide and 1,4-ethylenepiperazine), addition, to the alkylated polymer, of an aqueous solution of hydrogen peroxide and acetic acid at a temperature of 15-50°C, the oxidation reaction being carried out for 4-7 hours at a molar ratio of the units of alkylated derivative of PEP and hydrogen peroxide equal to 1:0.6-0.75, with subsequent purification of the resultant aqueous solution by ultrafiltration at pH above 8.

Yet another aspect of the invention is a derivative of the copolymer of N-oxide of 1,4-ethylenepiperazine, (N-carboxymethyl)-1,4-ethylenepiperazinium and 1,4-ethylenepiperazine in the form of a zwitterion, obtained by the stated method, which has in its structure a third unit with unsubstituted nitrogen atoms of general formula

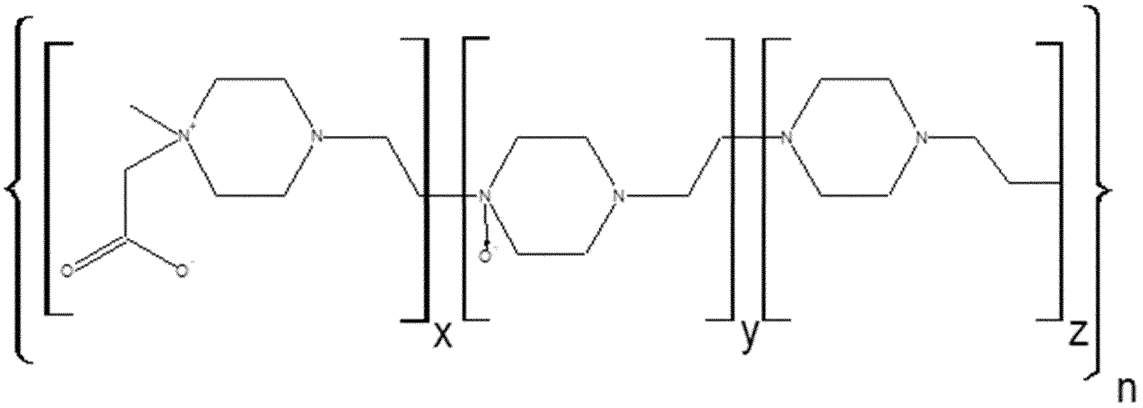

where x=(0.03-0.2); y=(0.6-0.78); z=(0.02-0.63), n is from 150 to 800; the average molecular weight of the copolymer is from 20-120 kDa.

The zwitterion of the copolymer of N-oxide of 1,4-ethylenepiperazine, (N-carboxymethyl)-1,4-ethylenepiperazinium and 1,4-ethylenepiperazine (with 3 units), obtained by the claimed method, is stable throughout the shelf life (24 months) (Example 14, Table 11).

The copolymer of N-oxide of 1,4-ethylenepiperazine, (N-carboxymethyl)-1,4-ethylenepiperazinium bromide and 1,4-ethylenepiperazine and its zwitterion, in whose structure there is a third unit with unsubstituted nitrogen atoms, may be used as a conjugate platform for creating drugs with prolonged action based on therapeutic proteins (cytokines, enzymes, hormones, growth factors, monoclonal antibodies). It is also possible to use the copolymer as an adjuvant in various vaccines and for producing conjugates and complexes with antigens for enhancing the immune response.

*Definitions*

- "molecular weight distribution" denotes the ratio of the amount of macromolecules based on molecular weight in a given sample;
- "average molecular weight" denotes a statistical mean value with respect to the molecular weights of the macromolecules making up the polymer.

**BRIEF DESCRIPTION OF THE FIGURES**

Fig. 1. This shows the flowsheet of polymerization of TED:

(1) conical polymerization reactor, (2) heating cabinet, (3) ultrahigh vacuum valve, (4) vacuum manometer, (5) nitrogen trap, (7) rough-vacuum pump, (6) turbomolecular pump.

Fig. 2. This shows a drawing of the polymerization (synthesis) reactor.

(1) cylinder equipped with a charging flange with grooves for fitting a gasket, (2) gasket, (3) top cover of the reactor, (4) screw thread, (5) nozzle for connecting the reactor to the vacuum line

Fig. 3. IR spectrum of poly-1,4-polyethylenepiperazine.

Fig. 4. $^{13}C$ NMR of poly-1,4-ethylenepiperazine.

Fig. 5. IR spectrum of the copolymer of (N-carboxymethyl)-1,4-ethylenepiperazinium bromide and 1,4-ethylenepiperazine, in whose structure there are two units, in the range 1800-1550 $cm^{-1}$.

Fig. 6. $^{1}H$ NMR spectrum of the copolymer of N-oxide of 1,4-ethylenepiperazine, (N-carboxymethyl)-1,4-ethylenepiperazinium bromide and 1,4-ethylenepiperazine, in whose structure there is a third unit with unsubstituted nitrogen atoms in $D_2O$.

Fig. 7. IR spectrum of the copolymer of N-oxide of 1,4-ethylenepiperazine, (N-carboxymethyl)-1,4-ethylenepiperazinium bromide and 1,4-ethylenepiperazine, in whose structure there is a third unit with unsubstituted nitrogen atoms, in the range 1850-850 $cm^{-1}$.

Fig. 8. $^{13}C$ NMR spectrum of the copolymer of (N-carboxymethyl)-1,4-ethylenepiperazinium bromide and 1,4-ethylenepiperazine in $D_2O$.

Fig. 9. Spectrum of the copolymer of N-oxide of 1,4-ethylenepiperazine, (N-carboxymethyl)-1,4-ethylenepiperazinium bromide in the composition of a copper-polymer complex. Dmax=267 nm.

Fig. 10. $^{13}C$ NMR spectrum of the copolymer of N-oxide of 1,4-ethylenepiperazine and (N-carboxymethyl)-1,4-ethylenepiperazinium bromide with two units in $D_2O$.

## DETAILED DESCRIPTION OF THE INVENTION

A polymerization reactor of conical shape is proposed, comprising a cylinder (1), equipped with a charging flange with grooves for fitting a gasket, gasket (2), top cover of the reactor (3), screw thread (4), nozzle for connecting the reactor to a vacuum line (5) (Fig. 2).

Use of the polymerization reactor makes it possible to create an ultrahigh vacuum of $1{\bullet}10^{-8}$ mbar and completely remove moisture of the air from the reactor, which ensures elimination of unwanted reactions, which lead to a wide distribution of molecular weight and a decrease in yield of the target product. Use of the polymerization reactor allows polymerization of TED to be carried out at excess pressure in an atmosphere of ultrapure inert gases (helium, argon etc.) (Example 13).

Another aspect of the present invention is a method of producing poly-1,4-ethylenepiperazine (PEP), envisaging mixing of TED monomer with a cationic catalyst in a molar ratio of 1:0.0001-0.0005, charging the synthesis reactor with the reaction mixture obtained, and deaeration of the reaction mixture at room temperature and vacuum of $1{\bullet}10^{-8}$ mbar for 30-60 minutes, carrying out polymerization, the reactor being placed in an oil bath or in a heating cabinet at a temperature from 215 to 295°C for 3-22 h with subsequent comminution of the resultant rods of poly-1,4-ethylenepiperazine to a homogeneous micronized substance with a particle size of less than 300 μm. Comminution consists of cooling the rods (PEP) in liquid nitrogen with subsequent immersion in purified water at a temperature of 90-100°C. Then the comminuted micronized (PEP) is centrifuged and dried under vacuum or in a fluidized bed dryer.

The method of producing poly-1,4-ethylenepiperazine (PEP) described is carried out as follows:
TED monomer is mixed with a cationic catalyst in a molar ratio of 1:0.0001-0.0005. The polymerization catalysts used are salt of metals able to form complexes, halides, Lewis acids, benzene sulphonic acid, ammonium and quaternary ammonium salts, salts of transition metals and hydrates thereof, strong inorganic acids. Ammonium bromide, for example, is used in one of the preferred variants.

The reaction mixture obtained is loaded in the synthesis reactor and consolidated on a vibrating screen. Then the charging nozzle of the reactor is sealed and, by means of the turbomolecular pump and the rough-vacuum pump, deaeration of the reaction mixture is carried out at room temperature and vacuum of $1{\bullet}10^{-8}$ mbar for 30-60 minutes. A sealing gasket made of a thermally stable grade of rubber, silicone or fluoroplastic is used as the sealing material between the reactor and the flange of the charging nozzle. The prepared reactor, at a vacuum of $1{\bullet}10^{-8}$ mbar, is put in an oil bath or in a heating cabinet at a temperature from 215 to 295°C for 3-22 h.

Then comminution of the resultant rods of poly-1,4-ethylenepiperazine to a homogeneous micronized substance with a particle size of less than 300 μm is carried out: rods of PEP are immersed in liquid nitrogen for 45-60 min, then the rods, cooled to a temperature of -190-195°C, are immersed in a water bath of purified water heated to 95-100°C and left for 2-4 h. The micronized PEP is centrifuged and any remaining moisture is removed in a vacuum heating cabinet at a temperature of 50-70°C or in a fluidized bed dryer at a temperature of 30-50°C. Variants of the proposed method of producing poly-1,4-ethylenepiperazine are presented in Examples 1-5.

Yet another aspect of the invention is PEP obtained by the method described above with a narrow molecular weight distribution and average molecular weight (from 20 to 120 kDa) of general formula:

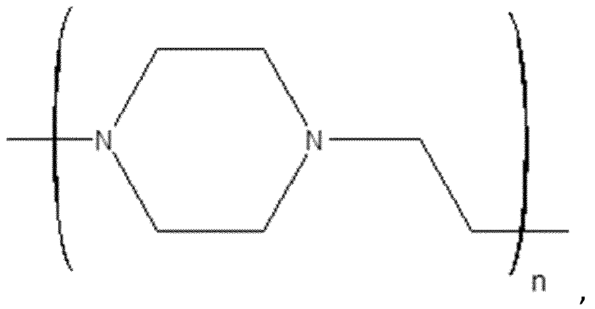

where n is from 180 to 1100.

Poly-1,4-ethylenepiperazine is obtained in the form of micronized powder with a particle size of less than 300 μm.

The structure of the polymer obtained is determined by IR spectroscopy, $^{13}C$ NMR and viscosimetry according to the European Pharmacopoeia and the State Pharmacopoeia of the Russian Federation (Figs. 3, 4, Table 1).

The IR spectrum of the polymer has absorption maxima at (1464±4) $cm^{-1}$; (1446±4) $cm^{-1}$; (1323±4) $cm^{-1}$; (1295±4) $cm^{-1}$; (1158±4) $cm^{-1}$; (1127±4) $cm^{-1}$; (1010±4) $cm^{-1}$; $^{13}C$ NMR ($D_2O$, $CD_3COOD$): 52.11 (2C, in-cycle); 53.25 (1C, out-cycle);

The residual moisture content is determined by K. Fischer's titrimetric method (European Pharmacopoeia, State Pharmacopoeia of the Russian Federation), and is not more than 10%. Molecular weight is determined by viscosimetry (European Pharmacopoeia, State Pharmacopoeia of the Russian Federation).

**Table 1.**

| PEP batch No. | Yield, % | Specific viscosity, cP | Average molecular weight, kDa |
|---|---|---|---|
| **Characterization of PEP obtained by the claimed method** | | | |
| 480517 | 99.8 | 2.33 | 100 |
| 490517 | 99.9 | 2.38 | 102 |
| 500517 | 99.8 | 2.35 | 101 |
| 510517 | 99.9 | 2.24 | 96 |
| 520517 | 99.9 | 2.28 | 98 |
| 010218 | 99.8 | 1.28 | 56 |
| 020318 | 99.8 | 0.46 | 20 |
| 030318 | 99.9 | 2.80 | 120 |
| **Characterization of PEP obtained by the known technology** | | | |
| 110600 | 89 | 11 | 458 |
| 120600 | 92 | 13 | 540 |
| 140700 | 94 | 13 | 540 |
| 020201 | 90 | 18 | 742 |
| 200701 | 95 | 16 | 661 |

The technical result according to the method of producing poly-1,4-ethylenepiperazine (PEP) consists of shortening of the production stages, increased yield of polymer (99.7%), reproducible waste-free technology, production of a product with a narrow molecular weight distribution compared to the known product (patent No. 2185388). The high yield of the polymerization reaction makes it possible to obtain PEP without using triple purification with hot purified water to remove low-molecular impurities followed by utilization of the production waste.

Additionally, the technical result provided by the claimed method consists of comminution of rods (of PEP) by mechanical destruction of the rod, caused by a high temperature gradient, which eliminates impurities of metallic dust (which has an adverse effect on the reaction of oxidation of N-carboxyethyl-1,4-ethylenepiperazinium bromide) and makes it possible to comminute the rods (of PEP) to uniform micronized powder with a particle size of less than 300 μm.

Comminuted PEP no larger than 300 μm makes it possible to carry out the synthesis of copolymer of N-oxide

of 1,4-ethylenepiperazine and (N-carboxymethyl)-1,4-ethylenepiperazinium bromide by means of alkylation of PEP in a heterogeneous aqueous or aqueous-organic medium with halogen derivatives of acetic acid or esters thereof with a cyclic or acyclic structure.

Table 1 presents comparative characteristics of PEP in various industrial batches, obtained by the known technology (patent No. 2185388) and by the claimed method. The spread of the values of specific viscosity and average molecular weight of the polymer obtained by the claimed method, presented in Table 1, is considerably less (spread of specific viscosity: 0.46-2.8 cP; spread of average molecular weight: 20-120 kDa) compared to the range of specific viscosity of PEP obtained by the known method of synthesis (spread of specific viscosity: 11-18 cP; spread of molecular weight: 458-742 kDa).

The stable polymerization process makes it possible to obtain PEP with a narrower molecular weight distribution and lower values of molecular weight. The average yield of the target product is more than 99.7%, whereas the average yield of the product obtained by the known method is 92% (patent No. 2185388).

Yet another aspect of the invention is a method of producing a copolymer of N-oxide of 1,4-ethylenepiperazine and (N-carboxymethyl)-1,4-ethylenepiperazinium bromide, consisting of two structural units, envisaging alkylation of PEP comminuted by the method described above to less than 300 μm in a heterogeneous aqueous or aqueous-organic medium with halogen derivatives of acetic acid or esters thereof with a cyclic or acyclic structure until homogeneity of the polymer solution is obtained at a temperature from 45 to 85°C and a molar ratio of PEP units and alkylating agent equal to 1:0.2-0.5, for 7-12 hours, obtaining, as an intermediate product, an alkylated derivative of PEP (copolymer of (N-carboxymethyl)-1,4-ethylenepiperazinium bromide and 1,4-ethylenepiperazine), addition, to the polymer alkylated by the method stated above, of an aqueous solution of hydrogen peroxide and acetic acid at a temperature of 55-75°C and a molar ratio of the units of alkylated derivative of PEP and hydrogen peroxide equal to 1:0.75-0.95 for 8-12 hours with subsequent purification of the aqueous solution obtained, preferably by ultrafiltration or dialysis to remove low-molecular impurities at pH below 7.

The claimed method of synthesis of the copolymer of N-oxide of 1,4-ethylenepiperazine and (N-carboxymethyl)-1,4-ethylenepiperazinium bromide makes it possible to obtain the target product without additional isolation and purification of the copolymer of N-oxide of 1,4-ethylenepiperazine and 1,4-ethylenepiperazine, and avoid the side reaction of O-alkylation; thus, the time for synthesis of an industrial batch of the copolymer according to the claimed method is reduced from 6 days to 3. The proposed method also makes it possible to reduce the time of the alkylation reaction by a large factor and reduce the amount of alkylating agent, also by a large factor, which then makes it possible to reduce the amount of water purified in the ultrafiltration step and reduce production waste.

Yet another aspect of the invention is the final product of the claimed method - copolymer of N-oxide of 1,4-ethylenepiperazine and (N-carboxymethyl)-1,4-ethylenepiperazinium bromide of general formula

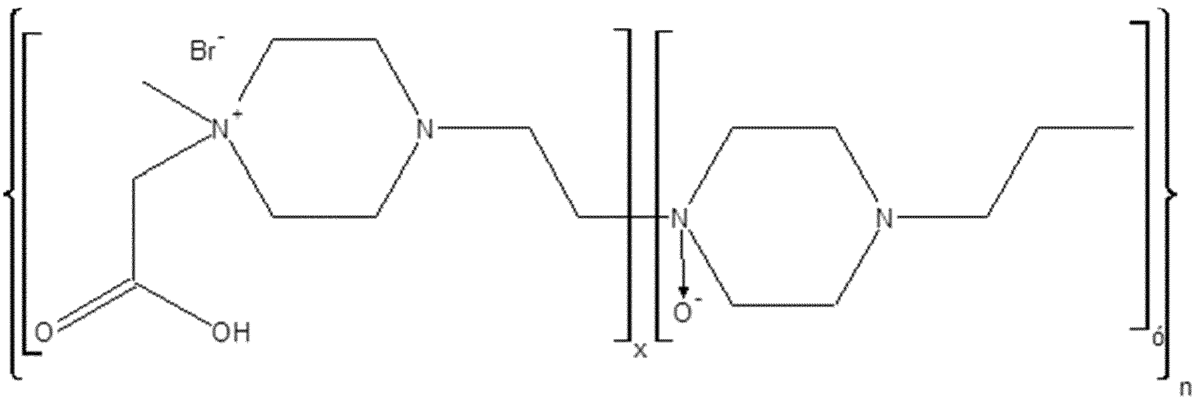

where x=(0.03-0.4); y=(0.6-0.97), n is from 150 to 800.

The copolymer of N-oxide of 1,4-ethylenepiperazine and (N-carboxymethyl)-1,4-ethylenepiperazinium bromide (with 2 units), obtained by the claimed method, has a narrow molecular weight distribution (Example 18, Table 13). The average molecular weight of the copolymer is from 20 to 120 kDa.

The structure of the copolymer was confirmed by viscosimetry, titanium titration, IR spectroscopy, spectrophotometry, $^{13}C$ NMR spectroscopy (Table 2).

The characteristics of the copolymer of N-oxide of 1,4-ethylenepiperazine and (N-carboxymethyl)-1,4-ethylenepiperazinium bromide (with 2 units), obtained by the claimed method, are presented in Table 2.

**Table 2**

| No. | Content of N-oxide groups, % | Content of alkyl groups, % | Average molecular weight, kDa |
|---|---|---|---|
| 250717 | 75 | 25 | 97 |
| 260817 | 73 | 27 | 95 |
| 270817 | 71 | 29 | 95 |
| 280817 | 76 | 24 | 94 |
| 290817 | 74 | 26 | 96 |
| 020518 | 78 | 22 | 20 |
| 030518 | 77 | 23 | 120 |

The copolymer of N-oxide of 1,4-ethylenepiperazine and (N-carboxymethyl)-1,4-ethylenepiperazinium bromide (with 2 units) obtained by the claimed method is more stable throughout the shelf life in contrast to the known copolymer of N-oxide of 1,4-ethylenepiperazine and (N-carboxymethyl)-1,4-ethylenepiperazinium bromide (Example 14, Table 8), where destruction of the polymer is observed, leading to a decrease in molecular weight and an increase in oligomers. Furthermore, the narrower molecular weight distribution provides improved pharmacological properties compared to the known copolymer (Example 15, Table 12; Example 18, Table 13).

Yet another aspect of the invention is the copolymer of (N-carboxymethyl)-1,4-ethylenepiperazinium bromide and 1,4-ethylenepiperazine, an intermediate product of the method of producing the copolymer of N-oxide of 1,4-ethylenepiperazine and (N-carboxymethyl)-1,4-ethylenepiperazinium bromide, which is an alkylated derivative of PEP of general formula

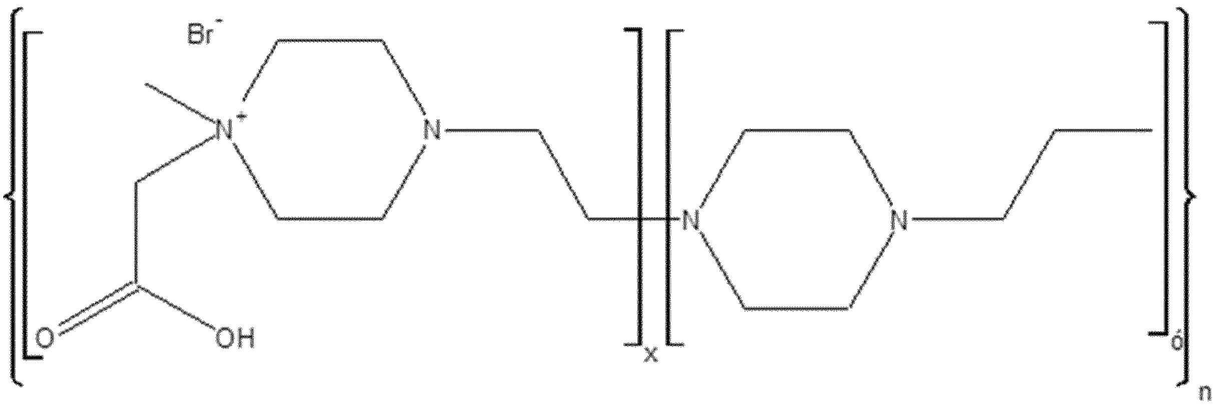

where x=(0.03-0.9); y=(0.1-0.97), n is from 150 to 800.

The average molecular weight of the copolymer is from 20 to 100 kDa.

The intermediate product of the claimed method, which is an alkylated derivative of PEP (copolymer of (N-carboxymethyl)-1,4-ethylenepiperazinium bromide and 1,4-ethylenepiperazine), may be used as a conjugate platform for creating drugs with prolonged action based on therapeutic proteins (cytokines, enzymes, hormones, growth factors, monoclonal antibodies). This product is stable throughout the shelf life (24 months) (Example 14, Table 7). Stabilization of the protein molecule by means of a chemical bond with a high-molecular carrier makes it possible to increase the intervals between injections, and correspondingly improve tolerability and increase drug safety. It is also possible to use the copolymer of (N-carboxymethyl)-1,4-ethylenepiperazinium bromide and 1,4-ethylenepiperazine as an adjuvant in various vaccines and for producing conjugates and complexes with antigens for enhancing the immune response (Example 19).

Yet another aspect of the invention is a method of producing a copolymer of N-oxide of 1,4-ethylenepiperazine and (N-carboxymethyl)-1,4-ethylenepiperazinium, consisting of two structural units, in the form of a zwitterion, envisaging alkylation of PEP comminuted by the method described above to less than 300 μm in a heterogeneous aqueous or aqueous-organic medium with halogen derivatives of acetic acid or esters thereof with a cyclic or acyclic structure until homogeneity of the polymer solution is obtained at a temperature from 45 to 85°C at a molar ratio of the PEP units and alkylating agent equal to 1:0.2-0.5, for 7-12 hours, obtaining, as an intermediate product, an alkylated derivative of PEP (copolymer of (N-carboxymethyl)-1,4-ethylenepiperazinium bromide and 1,4-ethylenepiperazine), addition, to the polymer alkylated by the method stated above, of an aqueous solution of hydrogen peroxide and acetic acid at a temperature

of 55-75°C at a molar ratio of PEP units and hydrogen peroxide equal to 1:0.75-0.95, the oxidation reaction being carried out for 8-12 hours with subsequent purification of the resultant aqueous solution by ultrafiltration at pH above 8.

Yet another aspect of the invention is a derivative of the copolymer of N-oxide of 1,4-ethylenepiperazine and (N-carboxymethyl)-1,4-ethylenepiperazinium in the form of a zwitterion (with two units), obtained by the claimed method, of general formula

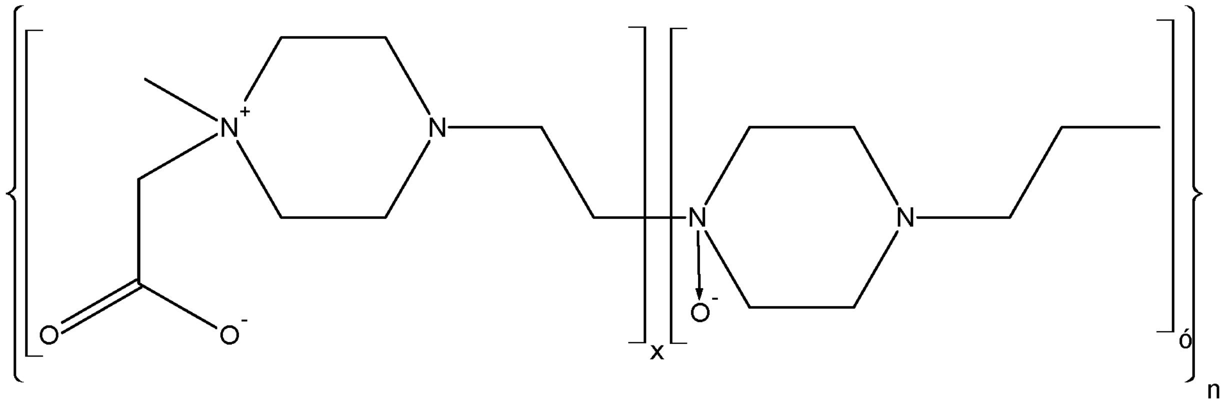

where x=(0.03-0.4); y=(0.6-0.97), n is from 150 to 800 with average molecular weight from 20 to 120 kDa.

The characteristics of the copolymer of N-oxide of 1,4-ethylenepiperazine and (N-carboxymethyl)-1,4-ethylenepiperazinium in the form of a zwitterion (with 2 units) are presented in Table 3.

**Table 3**

| No. | Content of N-oxide groups, % | Content of alkyl groups, % | Average molecular weight, kDa |
|---|---|---|---|
| 010517 | 74 | 26 | 98 |
| 020617 | 75 | 25 | 94 |
| 030617 | 73 | 27 | 96 |
| 040617 | 72 | 28 | 97 |
| 050617 | 75 | 25 | 96 |
| 050318 | 76 | 24 | 23 |
| 070318 | 78 | 22 | 120 |

The copolymer of N-oxide of 1,4-ethylenepiperazine and (N-carboxymethyl)-1,4-ethylenepiperazinium in the form of a zwitterion (with 2 units), obtained by the claimed method, is stable throughout the shelf life (Example 14, Table 9).

The copolymer of N-oxide of 1,4-ethylenepiperazine, (N-carboxymethyl)-1,4-ethylenepiperazinium bromide and 1,4-ethylenepiperazine in the form of a zwitterion may be used as a conjugate platform for creating drugs with prolonged action based on therapeutic proteins (cytokines, enzymes, hormones, growth factors, monoclonal antibodies) (Example 16). It is also possible to use it as an adjuvant in various vaccines and for producing conjugates and complexes with antigens for enhancing the immune response.

Yet another aspect of the invention is a method of producing a copolymer of N-oxide of 1,4-ethylenepiperazine, (N-carboxymethyl)-1,4-ethylenepiperazinium bromide and 1,4-ethylenepiperazine, which has in its structure a third unit with unsubstituted nitrogen atoms, envisaging alkylation of PEP comminuted by the method described above to less than 300 μm in a heterogeneous aqueous or aqueous-organic medium with halogen derivatives of acetic acid or esters thereof with a cyclic or acyclic structure until homogeneity of the polymer solution is obtained at a temperature from 20 to 40°C at a molar ratio of the PEP units and alkylating agent equal to 1:0.05-0.2, for 2-6 hours, obtaining, as an intermediate product, an alkylated derivative of PEP (copolymer of (N-carboxymethyl)-1,4-ethylenepiperazinium bromide and 1,4-ethylenepiperazine), addition, to the alkylated polymer, of an aqueous solution of hydrogen peroxide and acetic acid at a molar ratio of units of alkylated PEP : hydrogen peroxide of 1:0.6-0.75 and a temperature of 15-50°C, the oxidation reaction being carried out for 4-7 hours with subsequent purification of the aqueous solution obtained, preferably by ultrafiltration or dialysis to remove low-molecular impurities at pH below 7.

Yet another aspect of the invention is a copolymer of N-oxide of 1,4-ethylenepiperazine, (N-carboxymethyl)-1,4-ethylenepiperazinium bromide and 1,4-ethylenepiperazine, which has in its structure a third unit with unsubstituted

nitrogen atoms of general formula

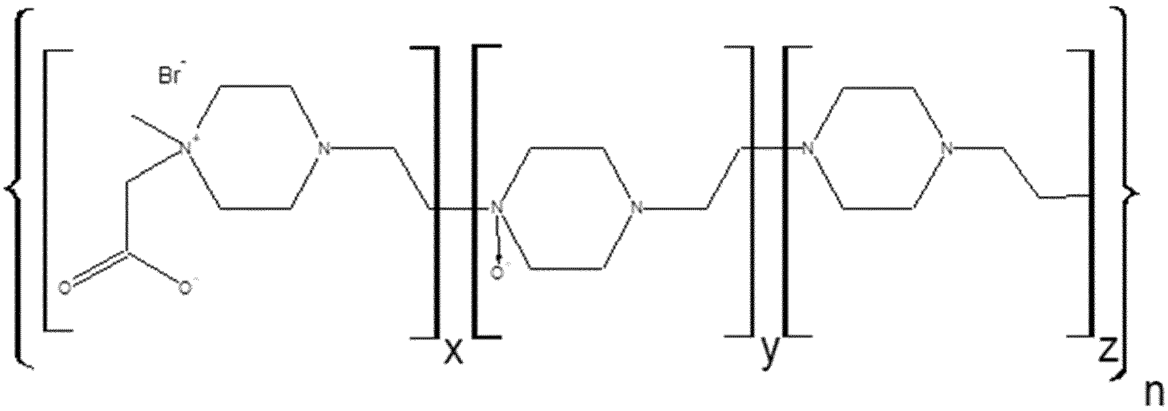

where x=(0.03-0.2); y=(0.6-0.78); z=(0.02-0.63), n is from 150 to 800 with an average molecular weight of the copolymer from 20 to 120 kDa.

The characteristics of the copolymer of N-oxide of 1,4-ethylenepiperazine, (N-carboxymethyl)-1,4-ethylenepiperazinium bromide and 1,4-ethylenepiperazine (with 3 units) are presented in Table 4.

**Table 4**

| No. | Content of N-oxide groups, % | Content of alkyl groups, % | Molecular weight, kDa |
|---|---|---|---|
| 010717 | 75 | 8 | 92 |
| 020717 | 72 | 11 | 94 |
| 030717 | 73 | 10 | 93 |
| 040717 | 74 | 9 | 89 |
| 050717 | 72 | 10 | 91 |
| 020218 | 71 | 8 | 55 |
| 050218 | 70 | 2 | 27 |
| 070318 | 21 | 8 | 120 |

The copolymer of N-oxide of 1,4-ethylenepiperazine, (N-carboxymethyl)-1,4-ethylenepiperazinium bromide and 1,4-ethylenepiperazine (with 3 units) obtained by the claimed method is more stable throughout its shelf life, compared to the known copolymer of N-oxide of 1,4-ethylenepiperazine and (N-carboxymethyl)-1,4-ethylenepiperazinium bromide (Example 14, Table 10), where destruction of the polymer is observed during storage, leading to a decrease in molecular weight and an increase in oligomers. Furthermore, the narrower molecular weight distribution provides improved pharmacological properties compared to the known polymer (Example 15, Table 12).

Yet another aspect of the invention is a method of producing a copolymer of N-oxide of 1,4-ethylenepiperazine, (N-carboxymethyl)-1,4-ethylenepiperazinium and 1,4-ethylenepiperazine, which has in its structure a third unit with unsubstituted nitrogen atoms, in the form of a zwitterion, envisaging alkylation of PEP comminuted by the method described above to less than 300 $\mu$m in a heterogeneous aqueous or aqueous-organic medium with halogen derivatives of acetic acid or esters thereof with a cyclic or acyclic structure until homogeneity of the polymer solution is obtained at a temperature from 20 to 40°C and a molar ratio of the PEP units and alkylating agent equal to 1:0.05-0.2, for 2-6 hours, obtaining, as an intermediate product, an alkylated derivative of PEP (copolymer of (N-carboxymethyl)-1,4-ethylenepiperazinium bromide and 1,4-ethylenepiperazine), addition, to the alkylated polymer, of an aqueous solution of hydrogen peroxide and acetic acid at a temperature of 15-50°C, the oxidation reaction being carried out for 4-7 hours at a molar ratio of the units of alkylated derivative of PEP and hydrogen peroxide equal to 1:0.6-0.75, with subsequent purification of the resultant aqueous solution by ultrafiltration at pH above 8.

Yet another aspect of the invention is a derivative of the copolymer of N-oxide of 1,4-ethylenepiperazine, (N-carboxymethyl)-1,4-ethylenepiperazinium and 1,4-ethylenepiperazine in the form of a zwitterion, obtained by the stated method, which has in its structure a third unit with unsubstituted nitrogen atoms of general formula

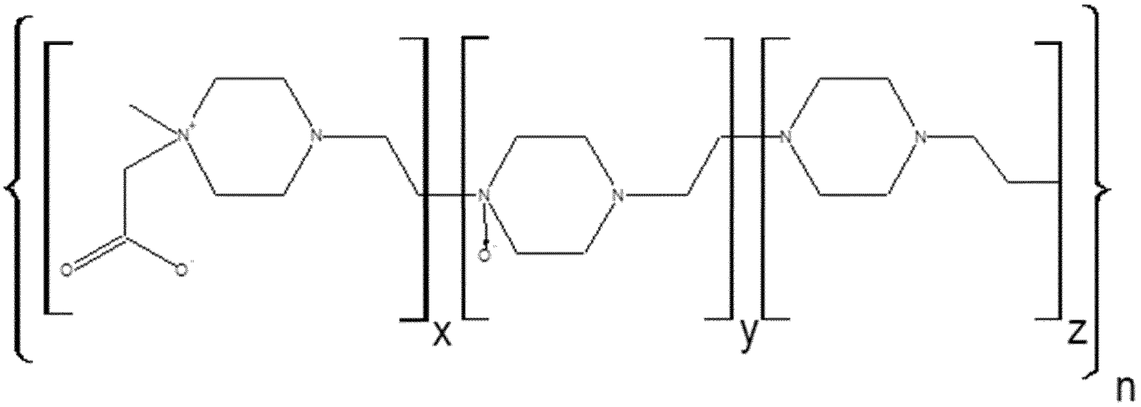

where x=(0.03-0.2); y=(0.6-0.78); z=(0.02-0.63), n is from 150 to 800 with average molecular weight from 20 to 120 kDa.

The structure of the copolymer of N-oxide of 1,4-ethylenepiperazine, (N-carboxymethyl)-1,4-ethylenepiperazinium and 1,4-ethylenepiperazine in the form of a zwitterion, in whose molecule there is a third unit with unsubstituted nitrogen atoms, is confirmed by the data of IR spectroscopy (Fig. 7), $^{1}H$ NMR spectroscopy (Fig. 6, Table 5)

**Table 5**

| No. | Content of N-oxide groups, % | Content of alkyl groups, % | Molecular weight, kDa |
|---|---|---|---|
| 010817 | 72 | 8 | 96 |
| 020917 | 73 | 12 | 90 |
| 030917 | 75 | 10 | 96 |
| 040917 | 74 | 10 | 92 |
| 050917 | 73 | 7 | 95 |
| 071017 | 71 | 8 | 120 |
| 081017 | 73 | 10 | 20 |

The copolymer of N-oxide of 1,4-ethylenepiperazine, (N-carboxymethyl)-1,4-ethylenepiperazinium and 1,4-ethylenepiperazine (with 3 units) in the form of a zwitterion, obtained by the claimed method, is stable throughout the shelf life (24 months) (Example 14, Table 11).

The copolymer of N-oxide of 1,4-ethylenepiperazine, (N-carboxymethyl)-1,4-ethylenepiperazinium bromide and 1,4-ethylenepiperazine and its zwitterion, in whose structure there is a third unit with unsubstituted nitrogen atoms, may be used as a conjugate platform for creating drugs with prolonged action based on therapeutic proteins (cytokines, enzymes, hormones, growth factors, monoclonal antibodies) (Examples 15 and 17). It is also possible to use the copolymer and its zwitterion as an adjuvant in various vaccines and for producing conjugates and complexes with antigens for enhancing the immune response.

The invention is illustrated by the following examples.

## METHODS

1. Analysis of the structure of poly-1,4-ethylenepiperazine (PEP)

The structure of PEP obtained by polymerization of 1,4-diazabicyclo[2.2.2]octane has been confirmed by the data of IR spectroscopy, $^{13}C$ NMR, and viscosimetry.

*IR spectroscopy*

Analysis of the structure of PEP was carried out by IR spectroscopy, using films of PEP with a thickness of 15-20 $\mu$m. The IR spectrum of PEP is presented in Fig.3.

The IR spectrum has absorption maxima at (1464±4) $cm^{-1}$; (1446±4) $cm^{-1}$; (1323±4) $cm^{-1}$; (1295±4) $cm^{-1}$; (1158±4) $cm^{-1}$; (1127±4) $cm^{-1}$; (1010±4) $cm^{-1}$.

A - bending (scissoring) vibrations of the C-H bond: 1464 $cm^{-1}$ - intracyclic group (*ic*) of $CH_2$, 1446 $cm^{-1}$ - $CH_2$ group outside of the cycle (*oc*);
B - bending (twisting) vibrations of the C-H bond: 1323 $cm^{-1}$ - *ic* $CH_2$, 1295 $cm^{-1}$ - *oc* $CH_2$ group;
C - asymmetrical stretching vibrations of the C-N bond: 1158 $cm^{-1}$ - group $C_{ic}$-N - $C_{oc}$, 1127 $cm^{-1}$ - group $C_{ic}$ - N - $C_{oc}$ (the subscript *ic* relates to carbon atoms in the cycle, *oc* - to carbon atoms outside the cycle);
D - symmetrical stretching vibrations of the C-N bond (pulsation of the cycle) 1010 $cm^{-1}$

References:

[1] - P.J. Hendra, D.B. Powell. The infrared and Raman spectra of piperazine. Spectrochimica Acta, 1962, Vol. 15, pp. 299-306.
[2] - P.J. Hendra, D.B. Powell. The infrared spectra and structures of metal complexes of 1,4-dioxan, 1,4-dithian, 1,4-thioxan, piperazine and 1,4-dimethylpiperazine. J. Chem. Soc., 1960, N12, pp. 5105-5112.

*NMR*

The data from $^{13}C$ NMR are presented in Fig. 4.
Poly-1,4-ethylenepiperazine was dissolved in acetic acid (molecular ratio 0.82:1) and the $^{13}C$ NMR spectrum was recorded (62.9 MHz; solvent $D_2O$).
The spectrum of poly-1,4-ethylenepiperazine contains signals at 52.11 MHz (methylene groups of the piperazine ring) and 53.25 MHz (extracyclic ethylene group) with ratio close to 2:1, 24.57 ($\underline{C}H_3CO_2H$), 182.06 ($CH_3\underline{C}O_2H$). These data confirm the structure of poly-1,4-ethylenepiperazine.
$^{13}C$ NMR ($D_2O$, $CD_3COOD$): 52.11 (2C, in-cycle); 53.25 (1C, out-cycle)

*Viscosimetry*

Viscosimetry is used for determining the molecular weight of the polymer. The viscosity value is one of the basic characteristics of the polymer, and is proportionally dependent on the molecular weight.
The specific viscosity of 0.25%, 0.5% and 1% solutions of the polymer is determined, and the reduced viscosity and characteristic viscosity are calculated. The molecular weight is calculated from the Mark-Kuhn-Houwink equation.
Analysis: PEP was dissolved in 3% acetic acid, containing 0.2M NaCl. It was measured automatically using the TV 2000/AKV Ubbelohde viscometer, constant 0.03.
2. Analysis of the copolymer of N-oxide of 1,4-ethylenepiperazine and (N-carboxymethyl)-1,4-ethylenepiperazinium bromide with two units according to the invention.

*Chemical method*

The presence or absence of bromide ions is determined by a chemical method according to Eur.Ph. 8.0, 2.3.1, method A.

*Titanium titration*

The degree of oxidation (content of N-oxide groups in the copolymer of N-oxide of 1,4-ethylenepiperazine and (N-carboxymethyl)-1,4-ethylenepiperazinium bromide) of nitrogen-containing rings of the polymer chain forming in conditions of specific oxidation is determined by the method of titanium titration.
The quantitative method of titanium titration "back titration" was used for determining the degree of oxidation of polymeric N-oxides. [Nekrasov A.V., Puchkova N.G., et al., Synthesis and properties of polymeric aliphatic N-oxides. Vysokomolekulyarnye soedineniya, 1980, Vol.(A) XXII, No. 6, p.1281-1285]

*IR spectroscopy*

The degree of alkylation (content of carboxyl groups) is determined by IR spectroscopy from the band of the stretching vibrations of the carboxylate anion at 1625 $cm^{-1}$. Betaine was used as a model compound for determining the specific extinction coefficient $E^{1\%}_{1cm}$:

$[(CH_3)_3{\equiv}N^+\text{-}CH_2\text{-}COOH]\ Cl^-$

*$^{13}C$ NMR*

Analysis: NMR spectra were obtained on an AM300 spectrometer (Bruker, Germany) with a working frequency of 75 MHz for carbon nuclei. Deuterated water is used as the solvent.

The $^{13}C$ NMR spectrum (75 MHz, $D_2O$, ppm) contains the following characteristic signals of the basic structural units: 168.76 ($C^8$, carbon atom of the carboxyl group), 66.00, 65.69, 63.65, 59.37, 58.74 ($C^2$ and $C^3$ carbon atoms bound to oxidized nitrogen atoms, also $C^6$, $C^7$ and $C^9$ carbon atoms bound to alkylated nitrogen atoms), 52.87, 51.77, 51.40, 49.60, 46.61, 45.68 ($C^1$, $C^5$ carbon atoms of cyclic methylene groups, located via a homologous unit from oxidized and alkylated nitrogen atoms and $C^4$, $C^{10}$ carbon atoms of extracyclic methylene groups, located via a homologous unit from oxidized and alkylated nitrogen atoms).

The $^{13}C$ NMR data obtained confirm the structure of the copolymer of N-oxide of 1,4-ethylenepiperazine and (N-carboxymethyl)-1,4-ethylenepiperazinium bromide (Fig. 10).

*UV spectrophotometry*

Identity is confirmed spectrophotometrically in the composition of the metal-polymer complex with copper ions in the wavelength range from 220 nm to 350 nm. The absorption maximum of the copper-polymer complex is 265±3 nm. The spectrum of the copolymer of N-oxide of 1,4-ethylenepiperazine and (N-carboxymethyl)-1,4-ethylenepiperazinium bromide is presented in (Fig. 9).

*Viscosimetry*

Viscosimetry is used for determining the molecular weight of the copolymer. The viscosity value is one of the basic characteristics of the copolymer, and is proportionally dependent on the molecular weight.

The specific viscosity of 0.25%, 0.5% and 1% solutions of the copolymer is determined, and the reduced and characteristic viscosity is calculated. The molecular weight is calculated from the Mark-Kuhn-Houwink equation

$$M = 83000\times10^4\ [\eta]^{1.34},$$

where

M is the molecular weight
$\eta$ is the characteristic viscosity

*Gel permeation chromatography*

The molecular weight distribution was monitored by gel permeation chromatography. A series of narrowly dispersed CO dextrans with different molecular weights, corresponding to the calibration range, was used as solutions for calibration.

3. Analysis of the copolymer of N-oxide of 1,4-ethylenepiperazine, (N-carboxymethyl)-1,4-ethylenepiperazinium bromide and 1,4-ethylenepiperazine, in whose molecule there is a third unit with unsubstituted nitrogen atoms, is presented for the example of a batch with degree of oxidation 70%, and degree of alkylation 10.3%.

*Chemical method*

The presence or absence of bromide ions is determined by the chemical method according to Eur.Ph. 8.0, 2.3.1, method A.

*Titanium titration*

The degree of oxidation (content of N-oxide groups in the copolymer of N-oxide of 1,4-ethylenepiperazine, (N-carboxymethyl)-1,4-ethylenepiperazinium bromide and 1,4-ethylenepiperazine), forming in conditions of specific oxidation of nitrogen-containing rings of the polymer chain, is determined by the method of titanium titration.

*IR spectroscopy*

The degree of alkylation (content of carboxyl groups) is determined by IR spectroscopy from the band of the stretching vibrations of the carboxylate anion at 1625 $cm^{-1}$. Betaine was used as a model compound for determining the specific extinction coefficient $E^{1\%}_{1cm}$:

$$[(CH_3)_3{=}N^+{-}CH_z{-}COOH]\ Cl^-$$

The structure of the copolymer of N-oxide of 1,4-ethylenepiperazine, (N-carboxymethyl)-1,4-ethylenepiperazinium bromide and 1,4-ethylenepiperazine was confirmed on the basis of the data from IR spectroscopy (Fig. 7).

Analysis: The IR spectra were recorded on an Agilent Cary 660 IR spectrometer with an attenuated total internal reflection attachment (ZnSe crystal).

The IR spectrum of the copolymer in the wavelength range 2000-850 $cm^{-1}$ (Fig. 7) has absorption maxima at 1628 $cm^{-1}$; 1448 $cm^{-1}$; 1329 $cm^{-1}$; 1305 $cm^{-1}$; 1158 $cm^{-1}$; 1129 $cm^{-1}$; 1009 $cm^{-1}$; 932 $cm^{-1}$.

The IR spectroscopy data obtained confirm the structure of the copolymer of N-oxide of 1,4-ethylenepiperazine, (N-carboxymethyl)-1,4-ethylenepiperazinium bromide and 1,4-ethylenepiperazine.

*$^1$H NMR*

Analysis of the quantitative NMR spectra was performed on an ECA 600 spectrometer (JEOL, Japan) with a working frequency of 600 MHz for protons; they were processed using the Delta program (JEOL). Deuterium oxide was used as the solvent.

The mutual influence and superposition of the signals of structurally non-identical protons, close in chemical shift, caused by different variants of the arrangement of the units of the polymer chain, is observed in the $^1$H spectrum. Therefore it is not possible to determine the multiplicity of the signals, and the designation set of signals (s.s.) will be introduced hereinafter for describing the spectrum.

$^1$H NMR spectrum (Fig. 6) (600 MHz, $D_2O$, Fig. 3): s.s. 4.2-3.8 ppm ($CH_2NO$, $H^2$, 28H; $CH_2NCH_2COOH$, $H^6$, 4H; $CH_2COOH$, $H^7$, 2H; overall 34H), s.s. 3.7-3.2 ppm ($CH_2N$, $H^1$, 28H; $CH_2NCH_2COOH$, $H^8$, 2H; $CH_2NO$, $H^3$, 14H; overall 44H), s.s. 3.1-2.75 ppm ($CH_2N$, $H^5$, 4H; $CH_2N$, H6, H13, H18, H19 overall 28H), 2.75-2.4 ppm ($CH_2N$, $H^4$, $H^9$, $H^{12}$, $H^{13}$, overall 16H).

The $^1$H NMR spectrum of the copolymer of N-oxide of 1,4-ethylenepiperazine, (N-carboxymethyl)-1,4-ethylenepiperazinium bromide and 1,4-ethylenepiperazine is presented in Fig. 6.

*Spectrophotometry*

The identity of the copolymer of N-oxide of 1,4-ethylenepiperazine, (N-carboxymethyl)-1,4-ethylenepiperazinium bromide and 1,4-ethylenepiperazine is confirmed by spectrophotometry in the composition of a metal-polymer complex with copper ions in the wavelength range from 550 nm to 800 nm. The absorption maximum of the copper-polymer complex is 660±3 nm.

*Viscosimetry*

Viscosimetry is used for determining the molecular weight of the copolymer. The viscosity value is one of the basic characteristics of the copolymer, and is proportionally dependent on the molecular weight.

The specific viscosity of 0.25%, 0.5% and 1% solutions of the copolymer is determined, and the reduced and characteristic viscosity is calculated. The molecular weight is calculated from the Mark-Kuhn-Houwink equation

*Gel permeation chromatography*

The molecular weight distribution is monitored by gel permeation chromatography. A series of narrowly dispersed CO dextrans with different molecular weights, corresponding to the calibration range, was used as the solutions for calibration.

4. Analysis of the copolymer of (N-carboxymethyl)-1,4-ethylenepiperazinium bromide and 1,4-ethylenepiperazine is presented for the example of a batch with a degree of alkylation of 42%.

*IR spectroscopy*

The degree of alkylation (content of carboxyl groups) is determined by IR spectroscopy on the band of stretching

vibrations of the carboxylate anion at 1625 $cm^{-1}$. The IR spectrum of the copolymer of (N-carboxymethyl)-1,4-ethylenepiperazinium bromide and 1,4-ethylenepiperazine is shown in Fig. 5. Betaine was used as the model compound for determination of the specific extinction coefficient $E^{1\%}_{1cm}$:

$$[(CH_3)_3\equiv N^+-CH_2-COOH]\ Cl^-$$

*$^{13}C$ NMR*

The structure of the copolymer of (N-carboxymethyl)-1,4-ethylenepiperazinium bromide and 1,4-ethylenepiperazine was analysed on the basis of the data of quantitative $^{13}C$ NMR spectroscopy (Fig. 8). The degree of alkylation, established on the basis of the IR spectroscopy data (Fig. 5), is 42%.

$^{13}C$ NMR (100 MHz; solvent $D_2O$): 168.78 ppm. COOH, C6, 2C) 59.62 ppm ($CH_2COOH$, C5, 2C), 59.12 ppm ($CH_2NCH_2COOH$, C2, C4, 4C), 53.48 ppm ($NCH_2$, C1, C3, 4C). 52.84 ppm ($CH_2NCH_2COOH$, C7, 2C), 51.90 ppm ($NCH_2CH_2N$, C9, C10, C11, C12, 12C); 49.60 ppm ($NCH_2CH_2NCH_2COOH$, C8, 2C); 46.78 ppm ($NCH_2CH_2N$, C13, C14, 6C).

*Viscosimetry*

Viscosimetry is used for determining the molecular weight of the copolymer. The viscosity value is one of the basic characteristics of the copolymer, and is proportionally dependent on the molecular weight.

The specific viscosity of 0.25%, 0.5% and 1% solutions of the copolymer is determined, and the reduced and characteristic viscosity is calculated. The molecular weight is calculated from the Mark-Kuhn-Houwink equation

*Gel permeation chromatography*

The molecular weight distribution is monitored by gel permeation chromatography. A series of narrowly dispersed CO dextrans with different molecular weights, corresponding to the calibration range, is used as the solutions for calibration.

**Example 1.** Production of poly-1,4-ethylenepiperazine (PEP)

In a mixer intended for stirring solid-dispersion powder materials, TED monomer in an amount of 500 g is mixed to a homogeneous mass with a cationic catalyst (NH4Br in a molar ratio of 1:0.0003) in an amount of 130 mg. Then the homogeneous mixture is transferred to a titanium synthesis reactor, the mixture is consolidated on a vibrating screen and deaeration of the reaction mixture is carried out, creating, using a rough-vacuum pump and a turbomolecular pump, a vacuum in the synthesis reactor of $1 \cdot 10^{-8}$ mbar for 30 minutes. The prepared reactor is immersed in an oil bath at a temperature of 235°C and the polymerization reaction is carried out for 18 hours.

Rods of PEP are taken out of the reactor, weighed and immersed in liquid nitrogen for 45 min, then the rods, cooled to a temperature of -190-195°C, are immersed in a water bath of purified water, heated to 100°C and left for 2 h. The micronized PEP is centrifuged and any remaining moisture is removed in a fluidized bed dryer at a temperature of 50°C.

The IR spectrum of PEP obtained in accordance with the claimed method has absorption maxima at 1464 $cm^{-1}$; 1447 $cm^{-1}$; 1323 $cm^{-1}$; 1294 $cm^{-1}$; 1158 $cm^{-1}$; 1128 $cm^{-1}$; 1009 $cm^{-1}$. The specific viscosity is 2.35 cP, the average molecular weight of the polymer is 101 kDa, and the residual moisture content is 1.8%.

*$^{13}C$ NMR*

$^{13}C$ NMR ($D_2O$, $CD_3COOD$): 52.11 (2C, in-cycle); 53.25 (1C, out-cycle)

The compound is represented by the general formula

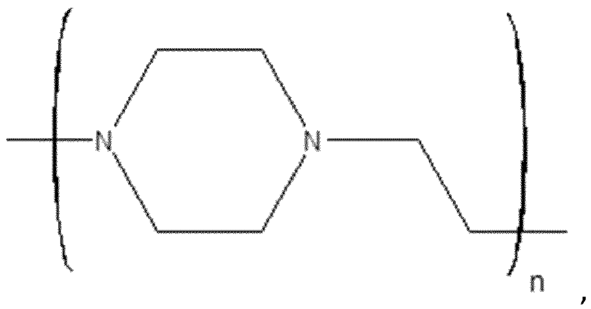

where n is from 180 to 1100.

**Example 2.** The process was carried out as in Example 1, except that polymerization was carried out at a temperature of 220°C for 15 hours, and benzene sulphonic acid in a ratio of 1:0.00035 (molar) was used as the catalyst of the polymerization reaction. The yield of the target product was 99.8%.

The IR spectrum of the PEP has absorption maxima at 1464 $cm^{-1}$; 1447 $cm^{-1}$; 1323 $cm^{-1}$; 1294 $cm^{-1}$; 1158 $cm^{-1}$; 1128 $cm^{-1}$; 1009 $cm^{-1}$.

*$^{13}C$ NMR*

$^{13}C$NMR ($D_2O$, $CD_3COOD$): 52.11 (2C, in-cycle); 53.25 (1C, out-cycle)

The specific viscosity is 2.33 cP, the average molecular weight of the polymer is 100 kDa, and the residual moisture content is 2.1%.

**Example 3.** The process was carried out as in Example 1, except that the polymerization reaction was carried out at a temperature of 270°C for 12 hours, ammonium bromide in an amount of 0.02% (molar) was used as a cationic catalyst and PEP was obtained with a viscosity of 1.28 cP, and an average molecular weight of 56 kDa.

The IR spectrum of the PEP obtained by the stated method has absorption maxima at 1465 $cm^{-1}$; 1447 $cm^{-1}$; 1324 $cm^{-1}$; 1295 $cm^{-1}$; 1158 $cm^{-1}$; 1128 $cm^{-1}$; 1010 $cm^{-1}$.

*$^{13}C$ NMR*

$^{13}C$NMR ($D_2O$, $CD_3COOD$): 52.11 (2C, in-cycle); 53.25 (1C, out-cycle)

and residual moisture content 2.2%. The yield of the target product was 99.8%.

**Example 4.** The process was carried out as in Example 1, except that the polymerization reaction was carried out at a temperature of 295°C for 3 hours, ammonium bromide in an amount of 0.01% (molar) was used as the cationic catalyst and PEP was obtained with a viscosity of 0.46 cP, the average molecular weight of which was 20 kDa.

The IR spectrum of the PEP obtained by the stated method has absorption maxima at 1465 $cm^{-1}$; 1446 $cm^{-1}$; 1322 $cm^{-1}$; 1297 $cm^{-1}$; 1158 $cm^{-1}$; 1128 $cm^{-1}$; 1010 $cm^{-1}$.

*$^{13}C$ NMR*

$^{13}C$ NMR ($D_2O$, $CD_3COOD$): 52.11 (2C, in-cycle); 53.25 (1C, out-cycle)

The value of the average molecular weight should be within the range 18-22 kDa, and the residual moisture content 1.7%. The yield of the target product was 99.8%.

**Example 5.** The process was carried out as in Example 1, except that the polymerization reaction was carried out at a temperature of 215°C for 22 hours, ammonium bromide in an amount of 0.05% (molar) was used as the cationic catalyst and PEP was obtained with a viscosity of 2.80 cP, and an average molecular weight of 120 kDa.

The IR spectrum of the PEP obtained by the stated method has absorption maxima at 1465 $cm^{-1}$; 1446 $cm^{-1}$; 1322 $cm^{-1}$; 1297 $cm^{-1}$; 1158 $cm^{-1}$; 1128 $cm^{-1}$; 1010 $cm^{-1}$. Residual moisture content 2.0%. The yield of the target product was 99.9%.

**Example 6.** Production of the copolymer of N-oxide of 1,4-ethylenepiperazine and (N-carboxymethyl)-1,4-ethylenepiperazinium bromide with two units

Micronized PEP, obtained in accordance with Example 1, in an amount of 1000 g is loaded into the reactor and alkylation of 550 g of bromoacetic acid is carried out at a temperature of 70°C for 8 hours.

The aqueous solution obtained is purified by ultrafiltration to remove low-molecular impurities in ultrafiltration equipment with a molecular weight cut-off of 10 kDa and is concentrated to 10-12%. The yield of the intermediate product, which is an alkylated derivative of PEP (copolymer of (N-carboxymethyl)-1,4-ethylenepiperazinium bromide and 1,4-ethylenepiperazine), is 95%.

The compound is represented by the general formula

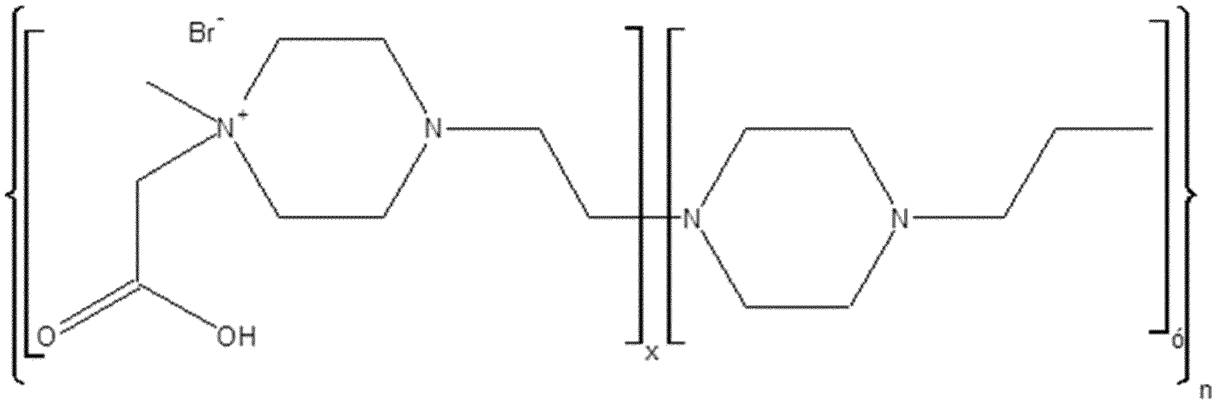

where x=(0.03-0.9); y=(0.1-0.97), n is from 150 to 800. The average molecular weight of the copolymer is 97 kDa, and the degree of alkylation (IR spectroscopy) is 25%.

The presence of bromide ions is confirmed by the chemical method according to the European Pharmacopoeia 8.0, 2.3.1, method A.

Then oxidation of the copolymer of (N-carboxymethyl)-1,4-ethylenepiperazinium bromide and 1,4-ethylenepiperazine is carried out.

If the aim of synthesis is to obtain the final product [copolymer of N-oxide of 1,4-ethylenepiperazine and (N-carboxymethyl)-1,4-ethylenepiperazinium bromide with two units], the intermediate product [copolymer of (N-carboxymethyl)-1,4-ethylenepiperazinium bromide and 1,4-ethylenepiperazine] is not isolated and ultrafiltration of the intermediate product is not carried out, so that the production time is shorter.

93 mol% of 30% aqueous solution of hydrogen peroxide, and 200 ml of glacial acetic acid are added at a temperature of 75°C to a homogeneous solution of the copolymer of (N-carboxymethyl)-1,4-ethylenepiperazinium bromide and 1,4-ethylenepiperazine, and the oxidation reaction is carried out for 10 hours. The aqueous solution obtained is purified by ultrafiltration to remove low-molecular impurities in ultrafiltration equipment with a molecular weight cut-off of 5 kDa at pH below 7 and is concentrated to 10-12%. The yield of the target product is 98%.

The compound is represented by the general formula

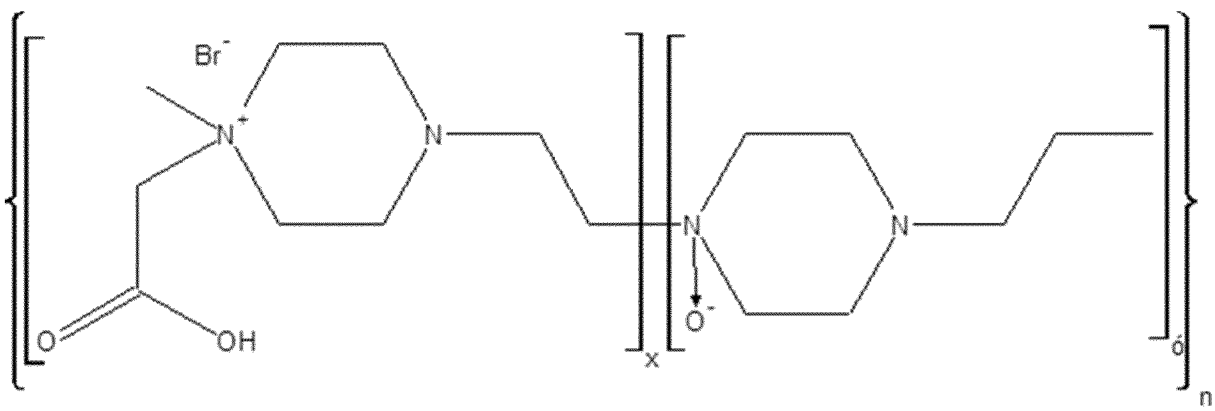

where x=(0.03-0.4); y=(0.6-0.97), n is from 150 to 800.

The average molecular weight of the copolymer according to the invention is 97 kDa. The absorption maximum

(by spectrophotometry) in the wavelength range from 220 nm to 350 nm is 267 nm. The degree of oxidation (titanium titration) is 75%, and the degree of alkylation (IR spectroscopy) is 25%.

The presence of bromide ions is confirmed by the chemical method according to the European Pharmacopoeia 8.0, 2.3.1, method A.

The resultant concentrate of the copolymer of N-oxide of 1,4-ethylenepiperazine and (N-carboxymethyl)-1,4-ethylenepiperazinium bromide or the lyophilizate thereof may be used as a substance for the production of finished dosage forms, and as a conjugate platform for drugs.

**Example 7.** The process was carried out as in Example 6, except that PEP obtained in accordance with Example 4 was used for synthesis of the copolymer. The average molecular weight of the copolymer was 20 kDa. The absorption maximum (by spectrophotometry) in the wavelength range from 220 nm to 350 nm is 266 nm. The degree of oxidation (titanium titration) is 78%, and the degree of alkylation (IR spectroscopy) is 22%.

The presence of bromide ions is confirmed by the chemical method according to the European Pharmacopoeia 8.0, 2.3.1, method A.

The resultant concentrate of the copolymer of N-oxide of 1,4-ethylenepiperazine and (N-carboxymethyl)-1,4-ethylenepiperazinium bromide or the lyophilizate thereof may be used as

**Example 8.** Production of the copolymer in the form of a zwitterion (with two units)

The process was carried out as in Example 6, except that ultrafiltration of the copolymer was carried out at pH above 8, the pH being adjusted by adding 1N solution of sodium hydroxide. The copolymer was obtained in the form of a zwitterion, which may be used subsequently for production of drugs. During ultrafiltration, bromide ion in the form of its sodium salt goes together with other low-molecular impurities into the production waste.

The compound is represented by the general formula:

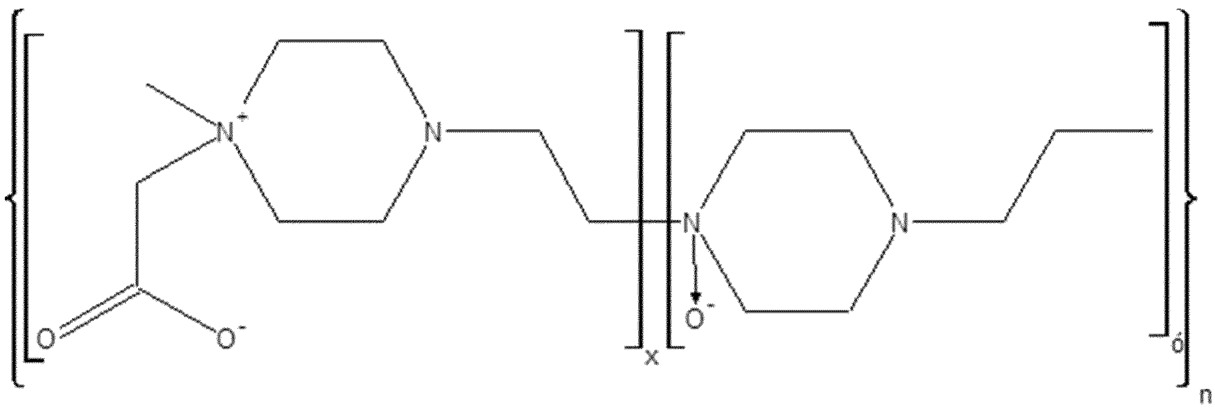

where x=(0.03-0.4); y=(0.6-0.97), n is from 150 to 800.

The average molecular weight of the copolymer of N-oxide of 1,4-ethylenepiperazine and (N-carboxymethyl)-1,4-ethylenepiperazinium in the form of a zwitterion is 98 kDa. The absorption maximum of the copolymer (by spectrophotometry) in the wavelength range from 220 nm to 350 nm is 265 nm. The degree of oxidation (titanium titration) is 74%, and the degree of alkylation (IR spectroscopy) is 26%.

Absence of bromide ions is confirmed by the chemical method according to the European Pharmacopoeia 8.0, 2.3.1, method A.

**Example 9.** Production of the copolymer of N-oxide of 1,4-ethylenepiperazine, (N-carboxymethyl)-1,4-ethylenepiperazinium bromide and 1,4-ethylenepiperazine with three units

Micronized PEP, obtained in accordance with Example 1, in an amount of 1000 g is loaded into the reactor and alkylation of 170 g of bromoacetic acid is carried out at a temperature of 40°C for 3 hours.

Then aqueous solution of hydrogen peroxide is added to a homogeneous solution of the polymer, observing the following molar ratio: copolymer of (N-carboxymethyl)-1,4-ethylenepiperazine and 1,4-ethylenepiperazine : hydrogen peroxide=1:0.75 and 100 ml of glacial acetic acid at a temperature of 15°C and the oxidation reaction is carried out for 5 hours. The aqueous solution obtained is purified by ultrafiltration to remove low-molecular impurities in ultrafiltration equipment with a molecular weight cut-off of 5 kDa at pH below 7 and is concentrated to 10-12%. The yield is 98%.

The compound is represented by the general formula:

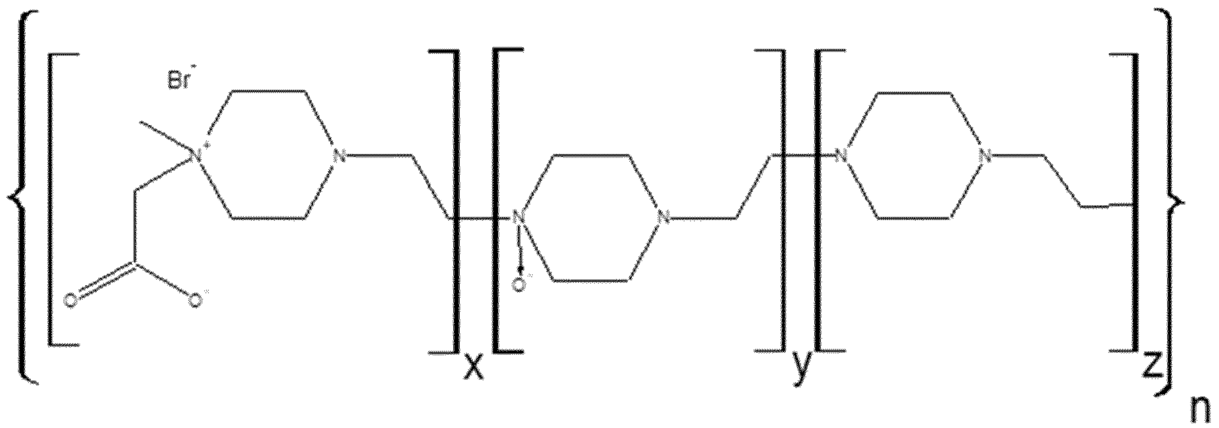

where x=(0.03-0.2); y=(0.6-0.78); z=(0.02-0.63), n is from 150 to 800.

The average molecular weight of the copolymer of N-oxide of 1,4-ethylenepiperazine, (N-carboxymethyl)-1,4-ethylenepiperazinium bromide and 1,4-ethylenepiperazine is 92 kDa. The degree of oxidation (titanium titration) is 75%, and the degree of alkylation (IR spectroscopy) is 8%.

The presence of bromide ions is confirmed by the chemical method according to the European Pharmacopoeia 8.0, 2.3.1, method A.

The absorption maximum (by spectrophotometry) in the wavelength range from 550 nm to 800 nm is 661 nm.

The resultant concentrate of the copolymer of N-oxide of 1,4-ethylenepiperazine, (N-carboxymethyl)-1,4-ethylenepiperazinium bromide and 1,4-ethylenepiperazine, in whose structure there is a third unit with unsubstituted nitrogen atoms, or the lyophilizate thereof, may be used as a substance for the production of finished dosage forms, or in the composition of compounds based thereon, and used as a conjugate platform for drugs.

**Example 10.** The process was carried out as in Example 9, except that PEP obtained according to Example 3, at a molar ratio to hydrogen peroxide of 1:0.72 was used for synthesis of the copolymer.

The average molecular weight of the copolymer of N-oxide of 1,4-ethylenepiperazine, (N-carboxymethyl)-1,4-ethylenepiperazinium bromide and 1,4-ethylenepiperazine is 55 kDa. The degree of oxidation (titanium titration) is 71%, and the degree of alkylation (IR spectroscopy) is 8%.

The presence of bromide ions is confirmed by the chemical method according to the European Pharmacopoeia 8.0, 2.3.1, method A.

The absorption maximum (by spectrophotometry) in the wavelength range from 550 nm to 800 nm is 661 nm.

The resultant concentrate of the copolymer of N-oxide-1,4-ethylenepiperazine, (N-carboxy)-1,4-ethylenepiperazinium bromide and 1,4-ethylenepiperazine, in whose structure there is a third unit with unsubstituted nitrogen atoms, or the lyophilizate thereof, may be used as a conjugate platform for drugs.

**Example 11.** The process was carried out as in Example 9, except that ultrafiltration of the copolymer was carried out at pH above 8, the pH being adjusted by adding 4N solution of sodium hydroxide. The copolymer was obtained in the form of a zwitterion with three units. During ultrafiltration, bromide ion in the form of its sodium salt goes together with other low-molecular impurities into the production waste.

The compound is represented by the general formula

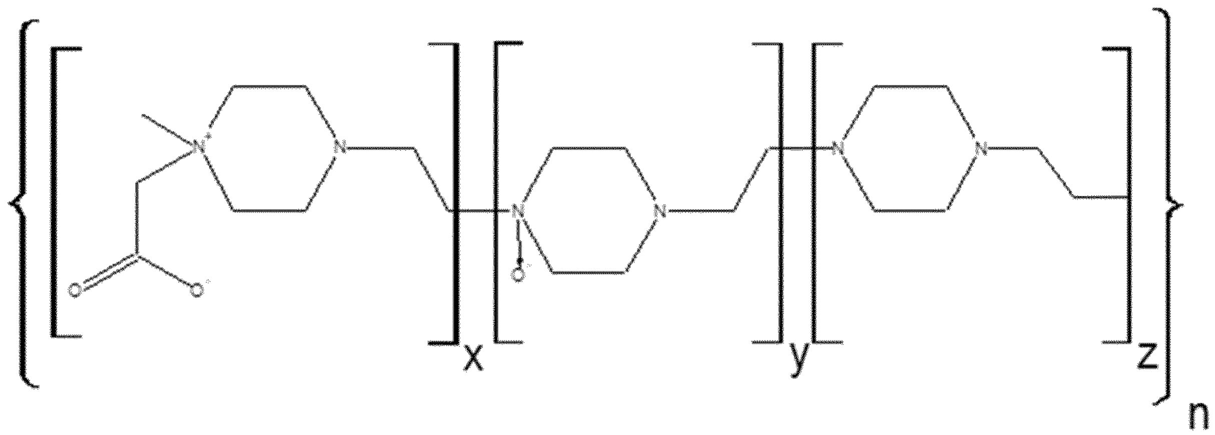

where x=(0.03-0.2); y=(0.6-0.78); z=(0.02-0.63), n is from 150 to 800.

The absorption maximum (by spectrophotometry) in the wavelength range from 550 nm to 800 nm is 660 nm.

The average molecular weight of the copolymer of N-oxide of 1,4-ethylenepiperazine, (N-carboxymethyl)-1,4-ethylenepiperazinium and 1,4-ethylenepiperazine in the form of a zwitterion is 96 kDa. The degree of oxidation (titanium titration) is 72%, and the degree of alkylation (IR spectroscopy) is 8%.

Absence of bromide ions is determined by the chemical method according to the European Pharmacopoeia 8.0, 2.3.1, method A.

**Example 12.** The process was carried out as in Example 6, except that PEP obtained according to Example 5 was used for synthesis of the copolymer, and alkylation of poly-1,4-ethylenepiperazine was carried out using chloroacetic acid. The copolymer of N-oxide of 1,4-ethylenepiperazine and (N-carboxymethyl)-1,4-ethylenepiperazinium chloride obtained by this method may be used as a conjugate platform for the synthesis of biologically active substances.

The compound is represented by the general formula

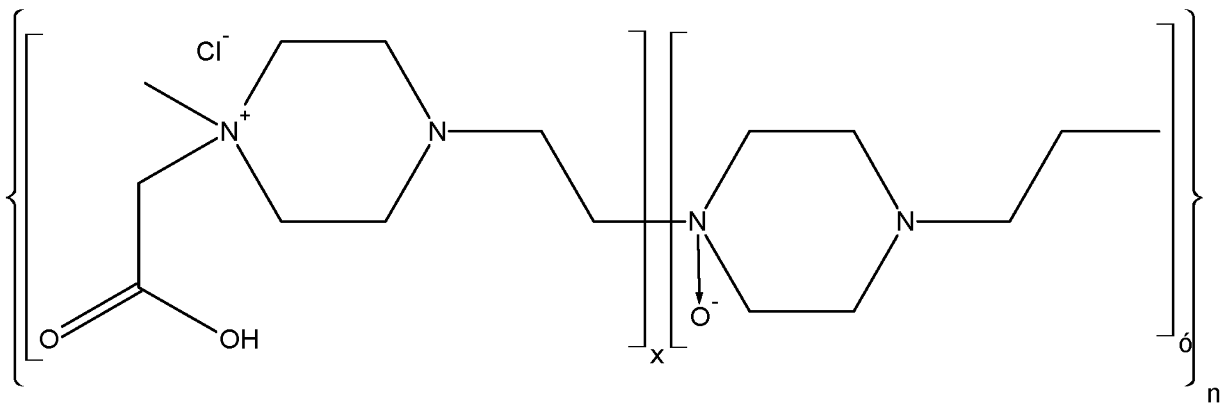

where x=(0.03-0.4); y=(0.6-0.97), n is from 150 to 800

The average molecular weight of the copolymer of N-oxide of 1,4-ethylenepiperazine and (N-carboxymethyl)-1,4-ethylenepiperazinium chloride is 118 kDa. The degree of oxidation (titanium titration) is 74%, and the degree of alkylation (IR spectroscopy) is 26%.

The presence of chloride ions is confirmed by the chemical method according to the European Pharmacopoeia 8.0, 2.3.1, method A.

**Example 13.** The process was carried out as in Example 1, except that after the deaeration stage ($1 \cdot 10^{-8}$ mbar for 30 minutes), 2 $kgf/cm^2$ of ultrapure argon was supplied to the polymerization reactor under excess pressure. Cationic catalyst was used in a molar ratio of 1:0.0002. Polymerization was carried out at a temperature of 230°C for 17 hours. The yield of the target product was 99.9%.

The IR spectrum of the PEP has absorption maxima at 1464 $cm^{-1}$; 1448 $cm^{-1}$; 1323 $cm^{-1}$; 1295 $cm^{-1}$; 1158 $cm^{-1}$; 1128 $cm^{-1}$; 1009 $cm^{-1}$.

<u>*$^{13}C$ NMR*</u>

$^{13}C$ NMR ($D_2O$, $CD_3COOD$): 52.11 (2C, in-cycle); 53.25 (1C, out-cycle)

The specific viscosity is 2.38 cP, the average molecular weight of the polymer is 102 kDa, and the residual moisture content is <0.1%.

**Example 14.** Stability of poly-1,4-ethylenepiperazine, its alkylated derivative (copolymer of (N-carboxymethyl)-1,4-ethylenepiperazinium bromide and 1,4-ethylenepiperazine), the copolymer of N-oxide of 1,4-ethylenepiperazine and (N-carboxymethyl)-1,4-ethylenepiperazinium bromide, consisting of two structural units, its zwitterion, the copolymer of N-oxide of 1,4-ethylenepiperazine, (N-carboxymethyl)-1,4-ethylenepiperazinium bromide and 1,4-ethylenepiperazine, in the molecule of which there is a third unit with unsubstituted nitrogen atoms, and its zwitterion.

**Table 6. Table of the stability of poly-1,4-ethylenepiperazine, obtained by the claimed method (batches 480517, 490517, 500517)**

| Indices | 0 point | 6 months | 12 months | 24 months |
|---|---|---|---|---|
| **Solubility** | Moderately soluble in 3.0% acetic acid solution | Moderately soluble in 3.0% acetic acid solution | Moderately soluble in 3.0% acetic acid solution | Moderately soluble in 3.0% acetic acid solution |
| **Moisture content, %** | 2.1±1.2 | 2.4±1 | 2.6±0.8 | 2.7±0.9 |
| **Molecular weight, kDa** | 101±2 | 101±2 | 100±1 | 99±2 |

The data presented in Table 6 demonstrate the stability of poly-1,4-ethylenepiperazine throughout the shelf life. The data were obtained for 3 industrial batches.

**Table 7. Stability of the copolymer of (N-carboxymethyl)-1,4-ethylenepiperazinium bromide and 1,4-ethylenepiperazine (batches 010217, 020217, 030317)**

| Indices | 0 point | 6 months | 12 months | 24 months |
|---|---|---|---|---|
| pH | 7.1±0.5 | 7.0 ±0.5 | 7.0±0.5 | 7.0±0.5 |
| Oligomers | Less than 0.001% | Less than 0.001% | Less than 0.001% | Less than 0.001% |
| Molecular weight | 76±4 kDa | 76±4 kDa | 76±4 kDa | 76±4 kDa |
| Degree of alkylation | 25±7% | 25±7% | 25±7% | 25±7% |

The data presented in Table 7 demonstrate the stability of the alkylated derivative of PEP (copolymer of (N-carboxymethyl)-1,4-ethylenepiperazinium bromide and 1,4-ethylenepiperazine), throughout the shelf life. The data were obtained for 3 industrial batches.

**Table 8. Stability of the copolymer of N-oxide of 1,4-ethylenepiperazine and (N-carboxymethyl)-1,4-ethylenepiperazinium bromide with 2 units according to the invention (batches 250717, 260817, 270817)**

| Indices | 0 point | | 6 months | | 12 months | | 24 months | |
|---|---|---|---|---|---|---|---|---|
| | Test | Control | Test | Control | Test | Control | Test | Control |
| **pH** | 6.8±0.2 | 6.8±0.5 | 6.8±0.3 | 6.8±0.4 | 6.8±0.2 | 6.8±0.2 | 6.9±0.2 | 6.8±0.4 |
| **Oligomers** | Less than 0.001% | 1.3±1.3 % | Less than 0.001% | 2.2±0.9 % | Less than 0.001% | 3.4±1.0 % | Less than 0.001% | 3.2±0.7 % |

(continued)

| Indices | 0 point | | 6 months | | 12 months | | 24 months | |
|---|---|---|---|---|---|---|---|---|
| | Test | Control | Test | Control | Test | Control | Test | Control |
| **Molecular weight** | 96±2 kDa | 95±6 kDa | 96±2 kDa | 81±5 kDa | 96±2 kDa | 73±3 kDa | 96±2 kDa | 66±4 kDa |
| **Degree of oxidation** | 73±4% | 77±2% | 73±4% | 77±2% | 73±4% | 77±2% | 73±4% | 77±2% |
| **Degree of alkylation** | 27±4% | 23±2% | 27±4% | 23±2% | 27±4% | 23±2% | 27±4% | 23±2% |

The data presented in Table 8 show that the copolymer of N-oxide of 1,4-ethylenepiperazine and (N-carboxymethyl)-1,4-ethylenepiperazinium bromide, consisting of two structural units, obtained by the claimed method, is more stable throughout its shelf life, compared to the known copolymer of N-oxide of 1,4-ethylenepiperazine and (N-carboxymethyl)-1,4-ethylenepiperazinium bromide (control), where destruction of the polymer is observed during storage, leading to a decrease in molecular weight and an increase in oligomers. The data were obtained for 6 industrial batches.

**Table 9. Stability of the copolymer of N-oxide of 1,4-ethylenepiperazine and (N-carboxymethyl)-1,4-ethylenepiperazinium in the form of a zwitterion with 2 units (batches 010517, 020617, 030617)**

| Indices | 0 point | 6 months | 12 months | 24 months |
|---|---|---|---|---|
| **pH** | 8±0.2 | 8±0.1 | 8±0.2 | 8±0.2 |
| **Oligomers** | Less than 0.001% | Less than 0.001% | Less than 0.001% | Less than 0.001% |
| **Molecular weight** | 96±4 kDa | 95±3 kDa | 95±3 kDa | 95±5 kDa |
| **Degree of oxidation** | 73±4% | 73±4% | 73±4% | 73±4% |
| **Degree of alkylation** | 27±4% | 27±4% | 27±4% | 27±4% |

The data presented in Table 9 show that the zwitterion of the copolymer of N-oxide of 1,4-ethylenepiperazine and (N-carboxymethyl)-1,4-ethylenepiperazinium, consisting of two structural units, obtained by the claimed method, is stable throughout the shelf life (24 months). The data were obtained for 3 industrial batches.

**Table 10.Stability of the copolymer of N-oxide of 1,4-ethylenepiperazine, (N-carboxymethyl)-1,4-ethylenepiperazinium bromide and 1,4-ethylenepiperazine with 3 units according to the invention (batches 010717, 020717, 030717)**

| Indices | 0 point | | 6 months | | 12 months | | 24 months | |
|---|---|---|---|---|---|---|---|---|
| | Test | Control | Test | Control | Test | Control | Test | Control |
| **pH** | 6.8±0.1 | 6.9±0.3 | 6.8±0.1 | 6.9±0.3 | 6.8±0.1 | 6.9±0.3 | 6.9±0.2 | 6.9±0.3 |
| **Oligomers** | Less than 0.001 % | 0.7±0.3 | Less than 0.001% | 1.9±0.5 | Less than 0.001% | 2.7±0.7 | Less than 0.001% | 3.5±0.5 |
| **Molecular weight** | 93±2 kDa | 81±5 | 92±2 kDa | 73±3 | 93±1 kDa | 71±3 | 92±3 kDa | 63±3 |
| **Degree of oxidation** | 73±3 % | 60±1% | 73±3% | 60±1% | 73±3% | 60±1% | 73±3% | 60±1% |
| **Degree of alkylation** | 10±3 % | 18±2% | 10±3% | 18±2% | 10±3% | 18±2% | 10±3% | 18±2% |

The data presented in Table 10 show that the copolymer of N-oxide of 1,4-ethylenepiperazine, (N-carboxymethyl)-1,4-ethylenepiperazinium bromide and 1,4-ethylenepiperazine (with 3 units), obtained by the claimed method, is more stable throughout its shelf life, compared to the known copolymer of N-oxide of 1,4-ethylenepiperazine and (N-carboxymethyl)-1,4-ethylenepiperazinium bromide, where destruction of the polymer is observed, leading to a decrease in molecular weight and an increase in oligomers. The data are presented for 3 industrial batches.

**Table 11. Stability of the copolymer of N-oxide of 1,4-ethylenepiperazine, (N-carboxymethyl)-1,4-ethylenepiperazinium and 1,4-ethylenepiperazine with 3 units in the form of a zwitterion according to the invention (batches 010817, 020917, 030917)**

| Indices | 0 point | 6 months | 12 months | 24 months |
|---|---|---|---|---|
| pH | 8.4±0.2 | 8.3±0.2 | 8.4±0.1 | 8.3±0.1 |
| Oligomers | Less than 0.001% | Less than 0.001% | Less than 0.001% | Less than 0.001% |
| Molecular weight | 94±5 kDa | 94±5 kDa | 94±5 kDa | 94±4 kDa |
| Degree of oxidation | 73±3% | 73±3% | 73±3% | 73±3% |
| Degree of alkylation | 8±3% | 8±3% | 8±3% | 8±3% |

The data presented in Table 11 show that the zwitterion of the copolymer of N-oxide of 1,4-ethylenepiperazine, (N-carboxymethyl)-1,4-ethylenepiperazinium and 1,4-ethylenepiperazine obtained by the claimed method, in whose molecule there is a third unit with unsubstituted nitrogen atoms, is stable throughout the shelf life (24 months). The data are presented for 3 industrial batches.

**Example 15. The antiradical activity** of the copolymer of N-oxide of 1,4-ethylenepiperazine and (N-carboxymethyl)-1,4-ethylenepiperazinium bromide, consisting of two structural units, and of the copolymer of N-oxide of 1,4-ethylenepiperazine, (N-carboxymethyl)-1,4-ethylenepiperazinium bromide and 1,4-ethylenepiperazine, in whose molecule there is a third unit with unsubstituted nitrogen atoms, is presented in Table 12.

In a study of the antiradical activity of copolymers according to the invention and of the known copolymer (control) it was shown that copolymers obtained according to the invention display greater antiradical activity, during the period of stability investigated.

**Table 12**

| Concentration for 50% suppression of the radical reaction, µg/l | | | | | |
|---|---|---|---|---|---|
| 0 point | | | 24 months | | |
| Test (2 units) | Test (3 units) | Control | Test (2 units) | Test (3 units) | Control |
| 10±3 | 15±3 | 22±3 | 11±2 | 17±2 | 53±5 |

The ability of the copolymers to suppress the formation of active forms of oxygen was assessed in the system of interaction of hydrogen peroxide with horseradish peroxidase (Reanal). Recording by formation of superoxide anion radicals was carried out using chemiluminescence from the rate of oxidation of luminol by the products of said reaction. Analysis of the chemiluminescence was performed on a Lucifer-B automated 36-channel chemiluminometer (Dialog, Moscow) at 37°C.

**Example 16.** Formation of a conjugate of the zwitterion of the copolymer of N-oxide of 1,4-ethylenepiperazine and (N-carboxymethyl)-1,4-ethylenepiperazinium, consisting of two structural units with superoxide dismutase

Conjugation of the copolymer of N-oxide of 1,4-ethylenepiperazine and (N-carboxymethyl)-1,4-ethylenepiperazinium in the form of a zwitterion with the antioxidant enzyme superoxide dismutase, with formation of a covalent bond, leads to an increase in the half-life of the conjugate by a factor of 320 compared to unconjugated superoxide dismutase.

Conjugated superoxide dismutase was obtained by the carbodiimide method of synthesis in a phosphate-salt buffer solution at a temperature of 5°C, with subsequent purification of the conjugate to remove low-molecular impurities in ultrafiltration equipment with a molecular weight cut-off of 1 kDa. The conjugating agent used was 1-(3-dimethylaminopropyl)-3-ethylcarbodiimide hydrochloride. The degree of conjugation is 98% (HPLC).

The activity of superoxide dismutase (SOD) in the blood was determined by a method based on measurement of the amount of the oxidation product of adrenalin - adrenochrome, which forms in the absence of additional sources of generation of superoxide (Sun M., Zigman S. An improved spectrophotometric assay for superoxide dismutase based on epinephrine autoxidation. Anal Biochem. 1978;90(1):81-89. doi: 10.1016/0003-2697(78)90010-6).

**Example 17.** Formation of conjugate of the zwitterion of the copolymer of N-oxide of 1,4-ethylenepiperazine, (N-carboxymethyl)-1,4-ethylenepiperazinium and 1,4-ethylenepiperazine, consisting of three structural units with collagenase

Conjugation of the copolymer of N-oxide of 1,4-ethylenepiperazine, (N-carboxymethyl)-1,4-ethylenepiperazinium and 1,4-ethylenepiperazine in the form of a zwitterion with the enzyme collagenase with formation of a covalent bond greatly increases the resistance of the enzyme to denaturing effects. The enzymatic activity of conjugated collagenase is maintained at a level of 95% of the initial value on heating to 30°C for 30 days, whereas in unconjugated collagenase there is 30% of the enzymatic activity.

Collagenase activity was measured by a biochemical method using azocoll as a substrate. One unit of enzyme activity was determined as the decomposition of μg of azocoll per ml.

Conjugated collagenase was obtained by the carbodiimide method of synthesis in phosphate-salt buffer solution at a temperature of 20°C, with subsequent purification of the conjugate to remove low-molecular impurities in ultrafiltration equipment with a molecular weight cut-off of 30 kDa. The conjugating agent used was 1-(3-dimethylaminopropyl)-3-ethylcarbodiimide hydrochloride. The degree of conjugation is 99% (HPLC).

**Example 18**

The molecular weight distribution of the copolymer of N-oxide of 1,4-ethylenepiperazine and (N-carboxymethyl)-1,4-ethylenepiperazinium bromide (with 2 units) and of the copolymer of N-oxide of 1,4-ethylenepiperazine, (N-carboxymethyl)-1,4-ethylenepiperazinium bromide and 1,4-ethylenepiperazine (with 3 units) was monitored by gel permeation chromatography. Monitoring was performed using a TSKgel G3000PWXL-CP chromatographic column; 30 cm × 7.8 mm; packed with particles of hydroxylated polymethacrylate; particle size 7 μm; Tosoh Corporation. As solutions for calibration we used a series of narrowly dispersed CO dextrans with different molecular weights, corresponding to the calibration range.

**Table 13. Molecular weight range of copolymers of N-oxide of 1,4-ethylenepiperazine and (N-carboxymethyl)-1,4-ethylenepiperazinium bromide (with 2 units), copolymers of N-oxide of 1,4-ethylenepiperazine, (N-carboxymethyl)-1,4-ethylenepiperazinium bromide and 1,4-ethylenepiperazine (with 3 units) according to the invention and obtained by the known technology.**

| Characterization of the copolymer of N-oxide of 1,4-ethylenepiperazine and (N-carboxymethyl)-1,4-ethylenepiperazinium bromide (with 2 units) obtained by the claimed method | | Characterization of the copolymer of N-oxide of 1,4-ethylenepiperazine, (N-carboxymethyl)-1,4-ethylenepiperazinium bromide and 1,4-ethylenepiperazine (with 3 units) obtained by the claimed method | | Control | |
|---|---|---|---|---|---|
| Batch No. | Molecular weight range measured by gel permeation chromatography, kDa | Batch No. | Molecular weight range measured by gel permeation chromatography, kDa | Batch No. | Molecular weight range measured by gel permeation chromatography, kDa |
| 180417 | 89-94 | 010717 | 90-96 | 1 | 61-94 |
| 190417 | 87-93 | 020717 | 86-96 | 2 | 72-98 |
| 200417 | 91-96 | 030717 | 84-92 | 3 | 61-89 |
| 210517 | 88-94 | 040817 | 86-93 | 4 | 63-95 |
| 220517 | 93-97 | 050817 | 91-95 | 5 | 67-98 |

**Example 19.** Formation of conjugate of the copolymer of (N-carboxymethyl)-1,4-ethylenepiperazinium bromide and 1,4-ethylenepiperazine with interferon α2

Conjugation of the copolymer of (N-carboxymethyl)-1,4-ethylenepiperazinium bromide and 1,4-ethylenepiperazine with interferon α2 with formation of a covalent bond makes it possible to create a product (cream or ointment for external use) that is stable at a temperature of 25°C for 2 years (the stability results are presented in Table 14 based on industrial test batches of cream 010417, 020417, 030517).

The composition of the cream comprises: glycerol monostearate 3.5-8.25%, cetyl stearyl alcohol 1.5-3.75%, ceteareth-231-3%, ceteareth-6%, interferon solution in phosphate-salt buffer 1.3-2.4%, sodium benzoate 0.1%, sodium chloride 0.5-1.5%, waterto 100%.

**Table 14. Stability of industrial test batches of cream based on conjugate of the copolymer of (N-carboxymethyl)-1,4-ethylenepiperazinium bromide and 1,4-ethylenepiperazine with interferon α2 (batches 010417, 020417, 030517)**

| Indices | 0 point | 6 months | 12 months | 24 months |
|---|---|---|---|---|
| Specific activity in 1 g of cream, IU | 21600±400 | 21000±300 | 19600±200 | 19000±300 |

Conjugated interferon α2 was obtained by the carbodiimide method of synthesis in phosphate-salt buffer solution at a temperature of 10°C, with subsequent purification of the conjugate to remove low-molecular impurities in ultrafiltration equipment with a molecular weight cut-off of 5 kDa. The conjugating agent used was 1-(3-dimethylaminopropyl)-3-ethylcarbodiimide hydrochloride. The degree of conjugation is more than 99% (HPLC). The copolymer of (N-carboxymethyl)-1,4-ethylenepiperazinium bromide and 1,4-ethylenepiperazine with a degree of alkylation of 42% was used for synthesis of the batches of conjugates of interferon α2.

The specific activity of the conjugate was determined according to RSP-14 General Monograph "Biological methods of testing preparations of interferons using cell cultures".

**Example 20.** The process was carried out as in Example 1, except that a reactor made of steel KhN65MV was used as the polymerization reactor. The yield of the target product was 99.9%.

The IR spectrum of the PEP has absorption maxima at 1465 $cm^{-1}$; 1447 $cm^{-1}$; 1323 $cm^{-1}$; 1294 $cm^{-1}$; 1158 $cm^{-1}$; 1128 $cm^{-1}$; 1008 $cm^{-1}$.

*$^{13}C$ NMR*

$^{13}C$ NMR ($D_2O$, $CD_3COOD$): 52.11 (2C, in-cycle); 53.25 (1C, out-cycle)

The specific viscosity is 2.24 cP, the average molecular weight of the polymer is 96 kDa, and the residual moisture content is 1.7%.

## Claims

1. Polymerization reactor of conical shape, comprising a cylinder (1), equipped with a charging flange with grooves for fitting a gasket, gasket (2), top cover of the reactor (3), screw thread (4), nozzle for connecting the reactor to a vacuum line (5), and using titanium and chemically inert alloys, used in the chemical industry, as the material for the reactor.

2. Method of producing poly-1,4-ethylenepiperazine (PEP), envisaging mixing of TED monomer with a cationic catalyst, charging the synthesis reactor with the reaction mixture obtained and deaeration of the reaction mixture at room temperature and vacuum of $1•10^{-8}$ mbar for 30-60 minutes, holding the reaction mixture at a temperature from 215 to 295°C for 3-22 h with subsequent comminution of the resultant rods of poly-1,4-ethylenepiperazine to a homogeneous micronized substance with a particle size of less than 300 μm.

3. Method according to Claim 2, **characterized in that** comminution of the resultant rods of poly-1,4-ethylenepiperazine to a homogeneous micronized substance with a particle size of less than 300 μm is carried out by cooling the rods

of PEP in liquid nitrogen with subsequent immersion in purified water at a temperature of 90-100°C, then the comminuted micronized (PEP) is centrifuged and dried.

4. Method according to Claim 3, **characterized in that** the rods of PEP are immersed in liquid nitrogen for 45-60 min.

5. Method according to Claim 3, **characterized in that** the rods are held in the water bath of purified water for 2-4 h.

6. Method according to Claim 3, **characterized in that** the comminuted micronized (PEP) is dried under vacuum at a temperature of 50-70°C or in a fluidized bed dryer at a temperature of 30-50°C.

7. Method according to Claim 2, **characterized in that** TED monomer is mixed with a cationic catalyst in a molar ratio of 1:0.0001-0.0005.

8. Method according to Claim 2, **characterized in that** the catalyst is selected from the group comprising salts of metals capable of complex formation, halides, Lewis acids, benzene sulphonic acid, ammonium and quaternary ammonium salts, salts of transition metals and hydrates thereof, strong inorganic acids.

9. Method according to Claim 8, **characterized in that** the catalyst is ammonium bromide.

10. Product obtained by the method according to Claim 2.

11. Poly-1,4-ethylenepiperazine (PEP) of general formula

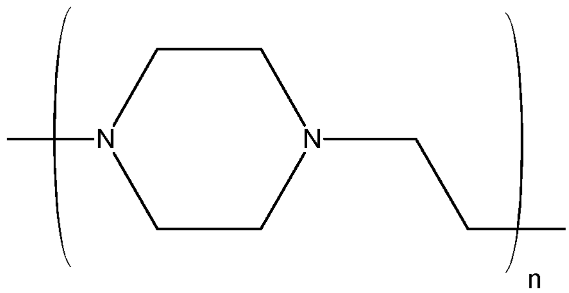

,

where n is from 180 to 1100, with average molecular weight from 20 to 120 kDa.

12. Method of producing a copolymer of N-oxide of 1,4-ethylenepiperazine and (N-carboxymethyl)-1,4-ethylenepiperazinium bromide, consisting of two structural units, envisaging alkylation of PEP comminuted by the method described above to less than 300 μm in a heterogeneous aqueous or aqueous-organic medium with halogen derivatives of acetic acid or esters thereof with a cyclic or acyclic structure until homogeneity of the polymer solution is obtained at a temperature from 45 to 85°C and a molar ratio of PEP units and alkylating agent equal to 1:0.2-0.5, for 7-12 hours, obtaining, as an intermediate product, an alkylated derivative of PEP (copolymer of (N-carboxymethyl)-1,4-ethylenepiperazinium bromide and 1,4-ethylenepiperazine), addition, to the polymer alkylated by the method stated above, of an aqueous solution of hydrogen peroxide and acetic acid at a temperature of 55-75°C and a molar ratio of the units of alkylated derivative of PEP and hydrogen peroxide equal to 1:0.75-0.95 for 8-12 hours with subsequent purification of the aqueous solution obtained at pH below 7.

13. Product obtained by the method according to Claim 12.

14. Copolymer of N-oxide of 1,4-ethylenepiperazine and (N-carboxymethyl)-1,4-ethylenepiperazinium bromide, consisting of two structural units, of general formula

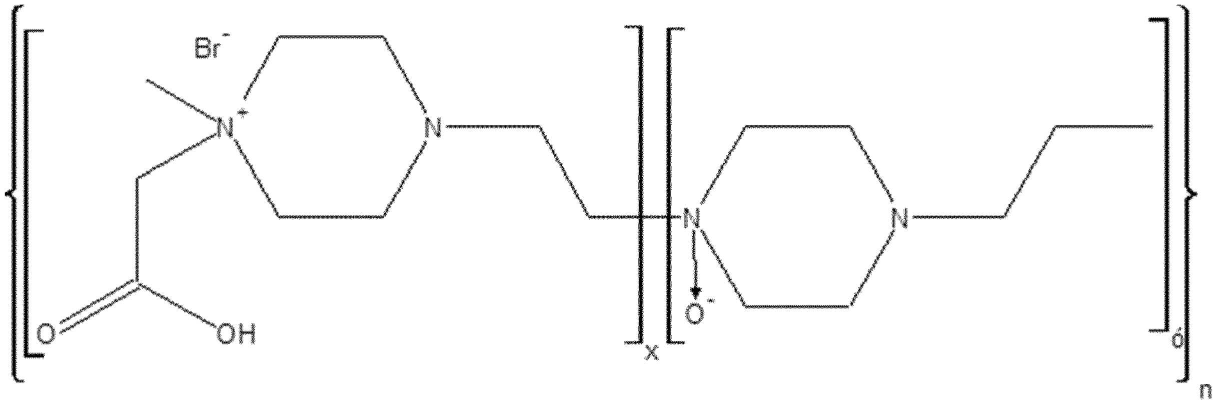

where x=(0.03-0.4); y=(0.6-0.97), n is from 150 to 800, with a narrow molecular weight distribution and average molecular weight from 20 to 120 kDa.

**15.** Method according to Claim 12, **characterized in that** alkylation of poly-1,4-ethylenepiperazine is carried out with chloroacetic acid, obtaining a copolymer of N-oxide of 1,4-ethylenepiperazine and (N-carboxymethyl)-1,4-ethylenepiperazinium chloride.

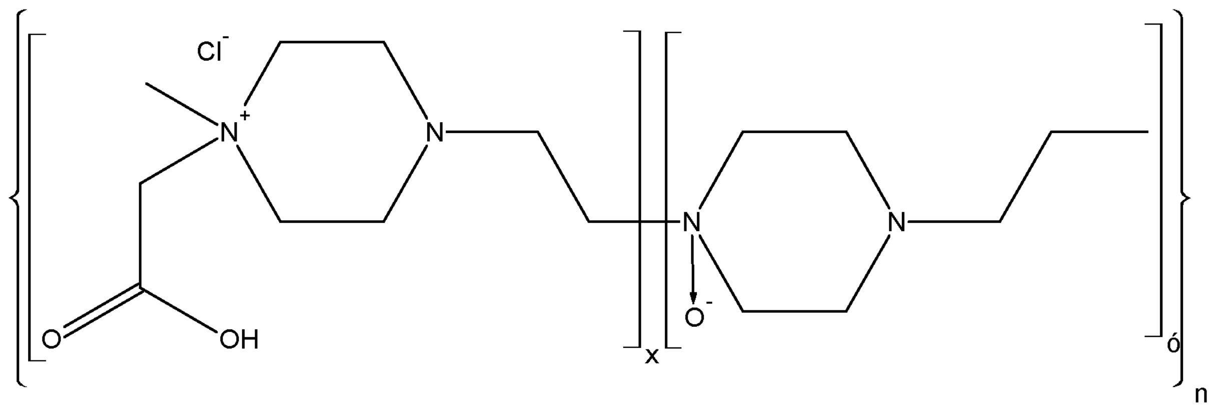

**16.** Method according to Claim 12, **characterized in that** purification is carried out by ultrafiltration or dialysis at pH below 8 to remove low-molecular impurities.

**17.** Method according to Claim 12, **characterized in that** oxidation is carried out in a homogeneous medium.

**18.** Intermediate product of the method according to Claim 12, which is an alkylated derivative of PEP.

**19.** Copolymer of (N-carboxymethyl)-1,4-ethylenepiperazinium bromide and 1,4-ethylenepiperazine of general formula

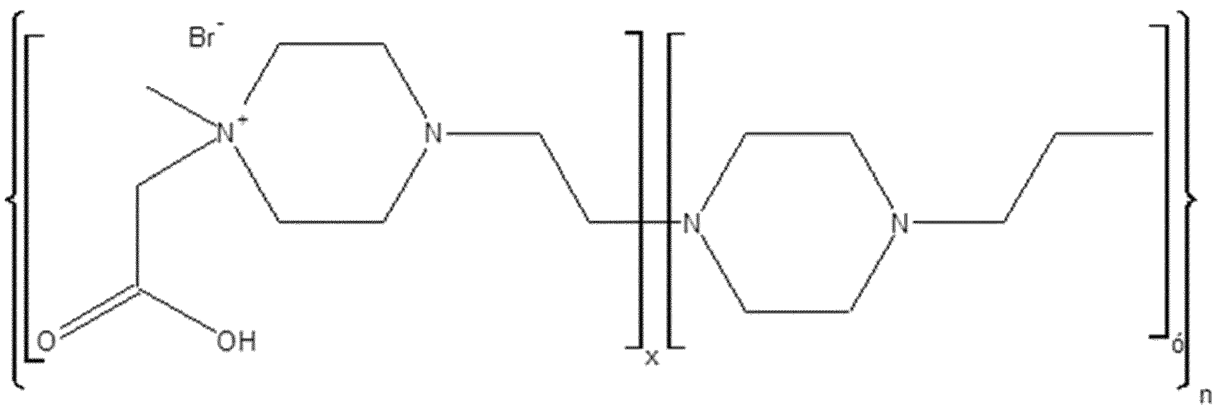

where x=(0.03-0.9); y=(0.1-0.97), n is from 150 to 800, with average molecular weight from 20 to 100 kDa.

**20.** Method of producing a copolymer of N-oxide of 1,4-ethylenepiperazine and (N-carboxymethyl)-1,4-ethylenepiperazinium, consisting of two structural units, in the form of a zwitterion, envisaging alkylation of PEP comminuted by the method described above to less than 300 μm in a heterogeneous aqueous or aqueous-organic medium with halogen derivatives of acetic acid or esters thereof with a cyclic or acyclic structure until homogeneity of the polymer solution is obtained at a temperature from 45 to 85°C at a molar ratio of the PEP units and alkylating agent equal to 1:0.2-0.5, for 7-12 hours, obtaining, as an intermediate product, an alkylated derivative of PEP (copolymer of (N-carboxymethyl)-1,4-ethylenepiperazinium bromide and 1,4-ethylenepiperazine), addition, to the polymer alkylated by the method stated above, of an aqueous solution of hydrogen peroxide and acetic acid at a temperature of 55-75°C at a molar ratio of PEP units and hydrogen peroxide equal to 1:0.75-0.95, the oxidation reaction being carried out for 8-12 hours with subsequent purification of the resultant aqueous solution by ultrafiltration or dialysis at pH above 8.

**21.** Product obtained by the method according to Claim 20.

**22.** Copolymer of N-oxide of 1,4-ethylenepiperazine and (N-carboxymethyl)-1,4-ethylenepiperazinium, consisting of two structural units, in the form of a zwitterion of general formula

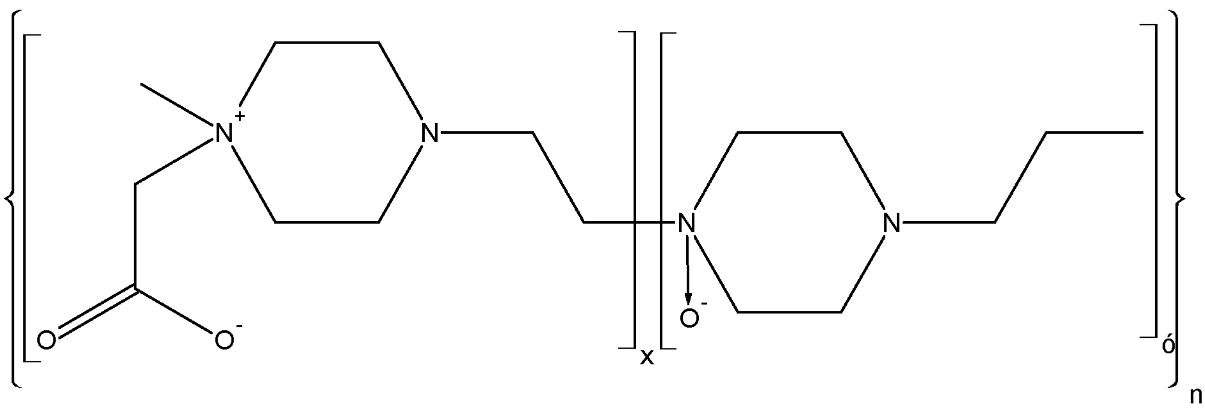

where x=(0.03-0.4); y=(0.6-0.97), n is from 150 to 800, with average molecular weight from 20 to 120 kDa.

**23.** Method of producing a copolymer of N-oxide of 1,4-ethylenepiperazine, (N-carboxymethyl)-1,4-ethylenepiperazinium bromide and 1,4-ethylenepiperazine, which has in its structure a third unit with unsubstituted nitrogen atoms of general formula, envisaging alkylation of PEP comminuted by the method described above to less than 300 μm in a heterogeneous aqueous or aqueous-organic medium with halogen derivatives of acetic acid or esters thereof with a cyclic or acyclic structure until homogeneity of the polymer solution is obtained at a temperature from 20 to 40°C at a molar ratio of the PEP units and alkylating agent equal to 1:0.05-0.2, for 2-6 hours, obtaining, as an intermediate product, an alkylated derivative of PEP (copolymer of (N-carboxymethyl)-1,4-ethylenepiperazinium bromide and 1,4-ethylenepiperazine), addition, to the alkylated polymer, of an aqueous solution of hydrogen peroxide and acetic acid at a molar ratio of units of alkylated PEP : hydrogen peroxide 1:0.6-0.75 and a temperature of 15-50°C, the oxidation reaction being carried out for 4-7 hours with subsequent purification of the aqueous solution obtained at pH below 7.

**24.** Method according to Claim 23, **characterized in that** purification to remove low-molecular impurities is carried out by ultrafiltration or dialysis at pH below 8.

**25.** Product obtained by the method according to Claim 23.

**26.** Copolymer of N-oxide of 1,4-ethylenepiperazine, (N-carboxymethyl)-1,4-ethylenepiperazinium bromide and 1,4-ethylenepiperazine, which has in its structure a third unit with unsubstituted nitrogen atoms of general formula

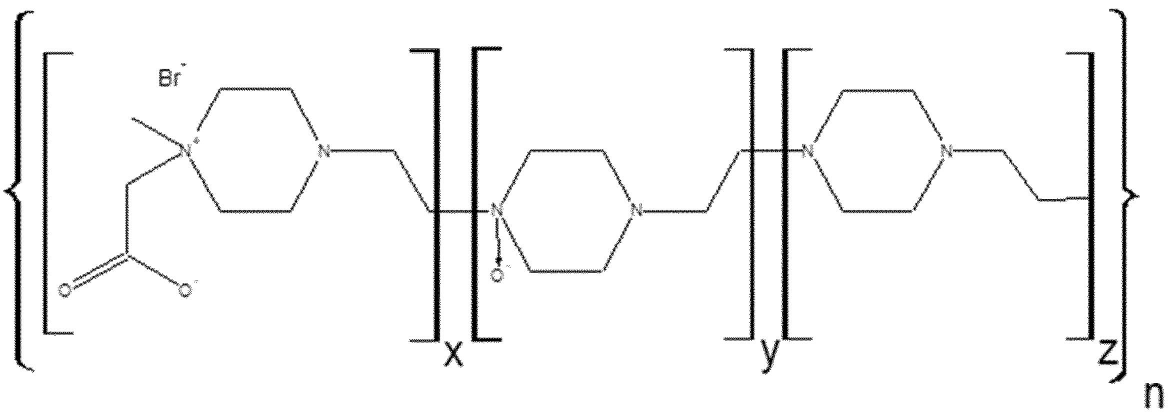

where x=(0.03-0.2); y=(0.6-0.78); z=(0.02-0.63), n is from 150 to 800, with average molecular weight from 20 to 120 kDa and a narrow molecular weight distribution.

**27.** Method of producing a copolymer of N-oxide of 1,4-ethylenepiperazine, (N-carboxymethyl)-1,4-ethylenepiperazinium and 1,4-ethylenepiperazine, which has in its structure a third unit with unsubstituted nitrogen atoms, in the form of a zwitterion, envisaging alkylation of PEP comminuted by the method described above to less than 300 μm in a heterogeneous aqueous or aqueous-organic medium with halogen derivatives of acetic acid or esters thereof with a cyclic or acyclic structure until homogeneity of the polymer solution is obtained at a temperature from 20 to 40°C and a molar ratio of the PEP units and alkylating agent equal to 1:0.05-0.2, for 2-6 hours, obtaining, as an intermediate product, an alkylated derivative of PEP (copolymer of (N-carboxymethyl)-1,4-ethylenepiperazinium bromide and 1,4-ethylenepiperazine), addition, to the alkylated polymer, of an aqueous solution of hydrogen peroxide and acetic acid at a temperature of 15-50°C, the oxidation reaction being carried out for 4-7 hours at a molar ratio of the units of alkylated derivative of PEP and hydrogen peroxide equal to 1:0.6-0.75, with subsequent purification of the resultant aqueous solution by ultrafiltration at pH above 8.

**28.** Product obtained by the method according to Claim 27.

**29.** Copolymer of N-oxide of 1,4-ethylenepiperazine, (N-carboxymethyl)-1,4-ethylenepiperazinium and 1,4-ethylenepiperazine in the form of a zwitterion, which has in its structure a third unit with unsubstituted nitrogen atoms of general formula

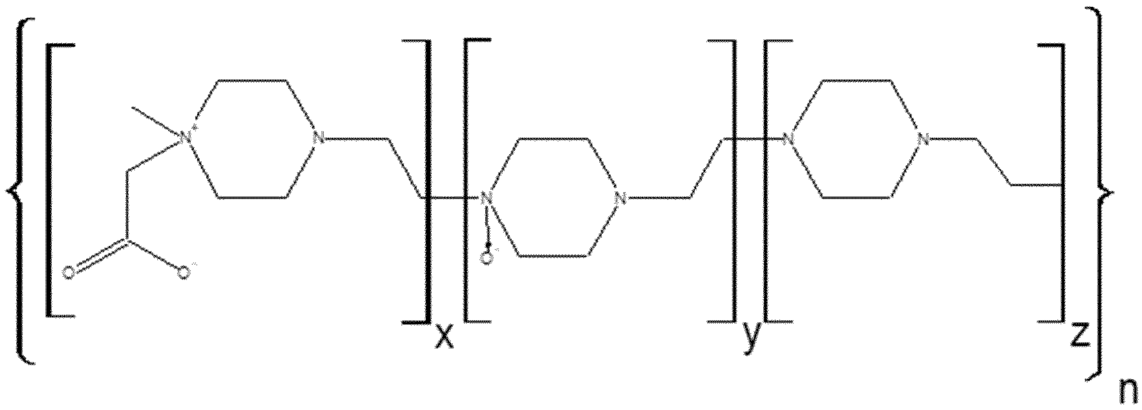

where x=(0.03-0.2); y=(0.6-0.78); z=(0.02-0.63), n is from 150 to 800, with a narrow molecular weight distribution and average molecular weight from 20 to 120 kDa.

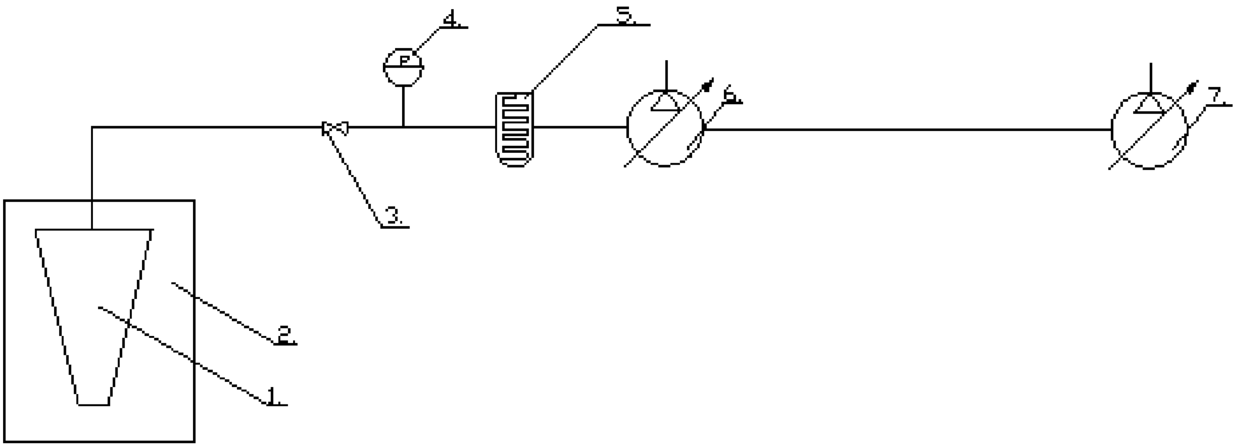


FIG. 1

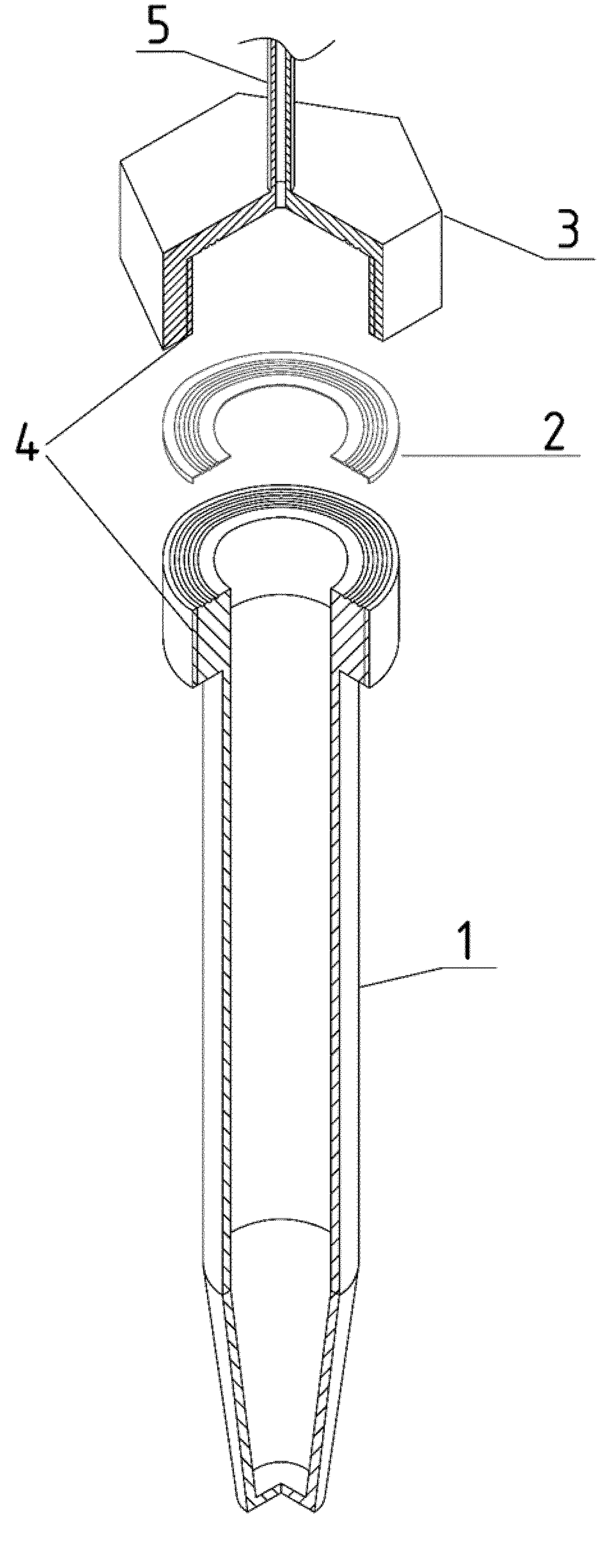


FIG. 2

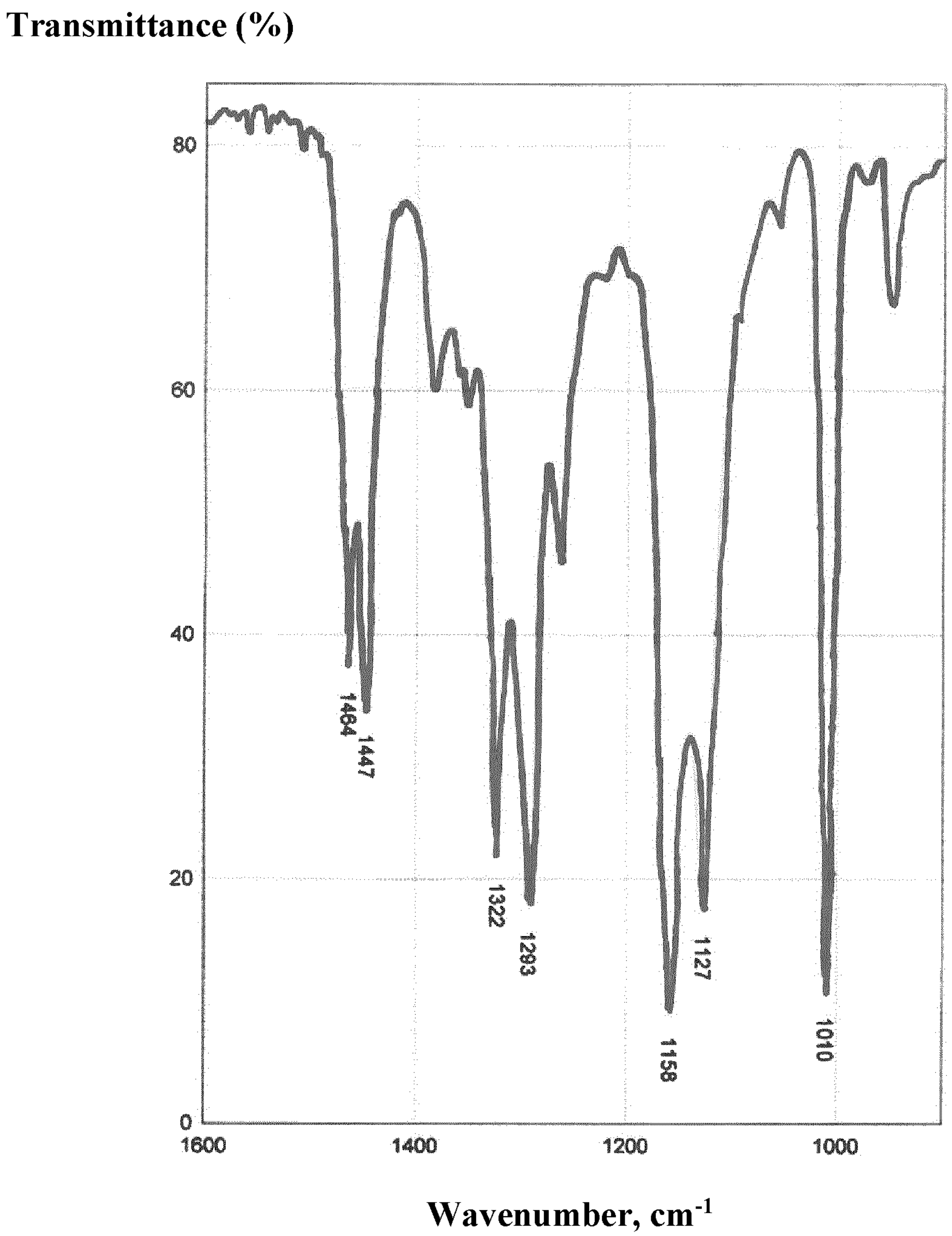
Transmittance (%)
80
60
40
20
0
1600
1400
1200
1000
1464
1447
1322
1293
1158
1127
1010
Wavenumber, $cm^{-1}$

FIG. 3

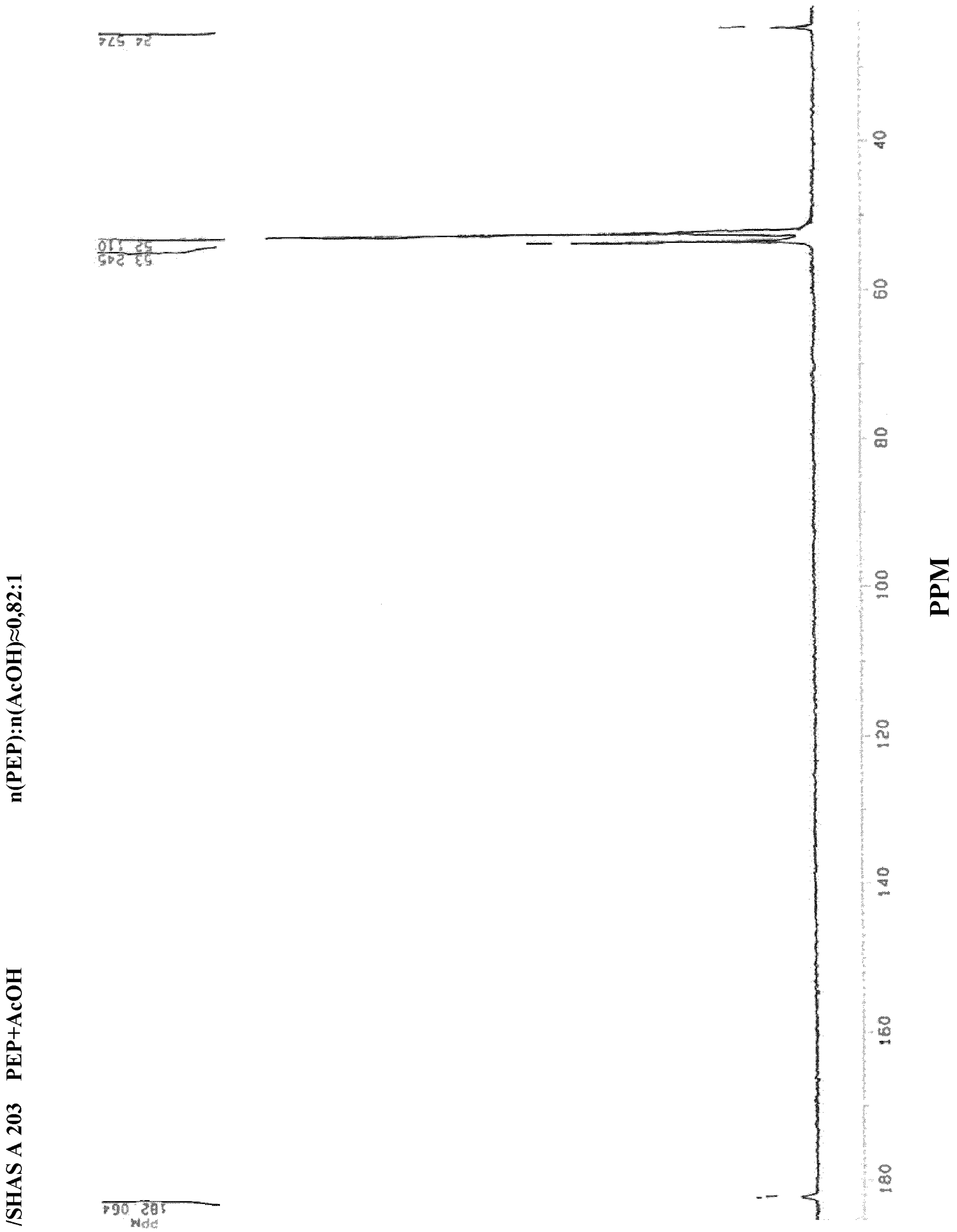
/SHAS A 203 PEP+AcOH
n(PEP):n(AcOH)≈0,82:1
24.574
52.110
53.245
182.064
PPM
40
60
80
100
120
140
160
180
PPM

FIG. 4

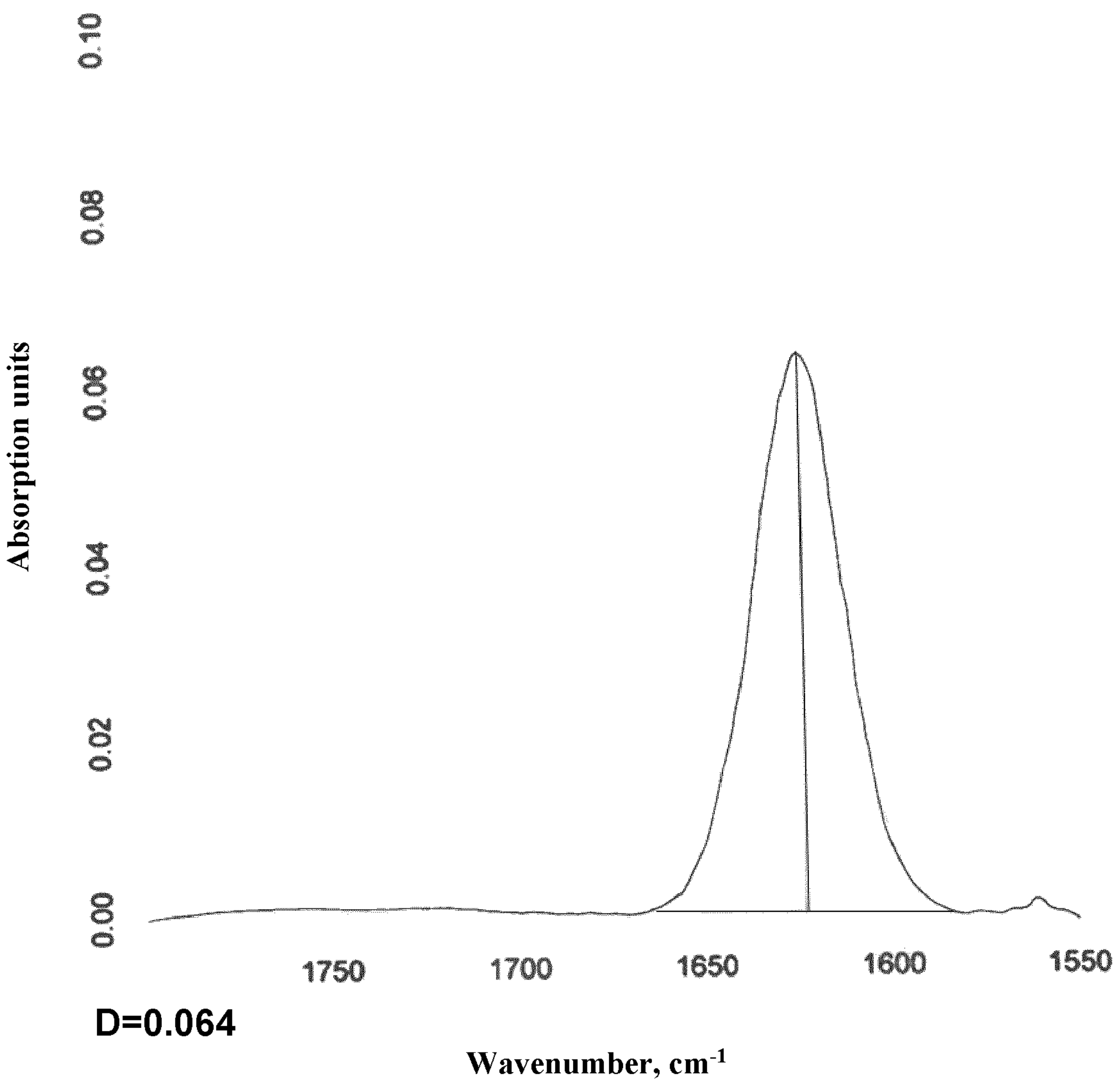
0.10
0.08
0.06
0.04
0.02
0.00
Absorption units
1750
1700
1650
1600
1550
D=0.064
Wavenumber, cm-1

FIG. 5

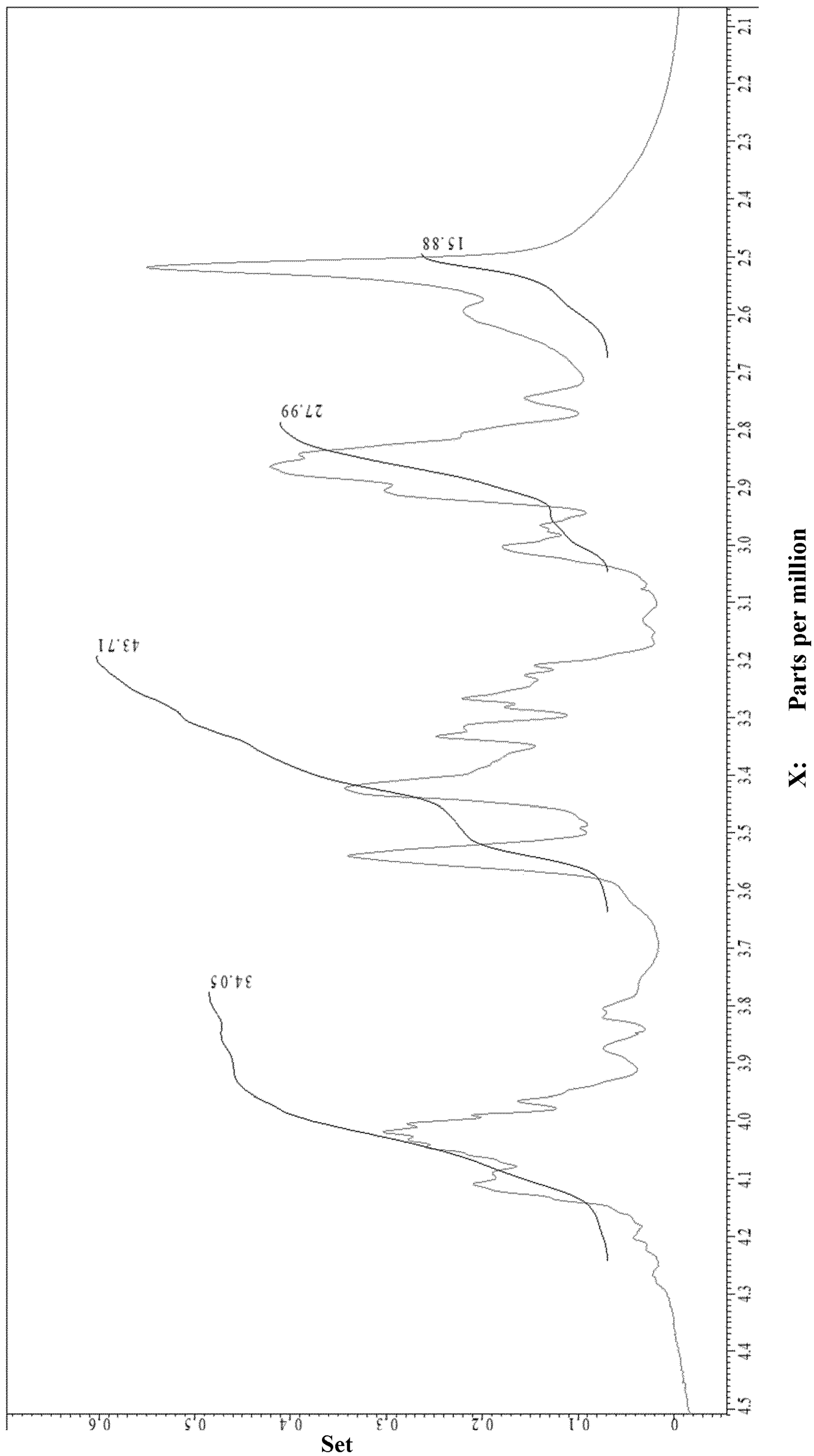


FIG. 6

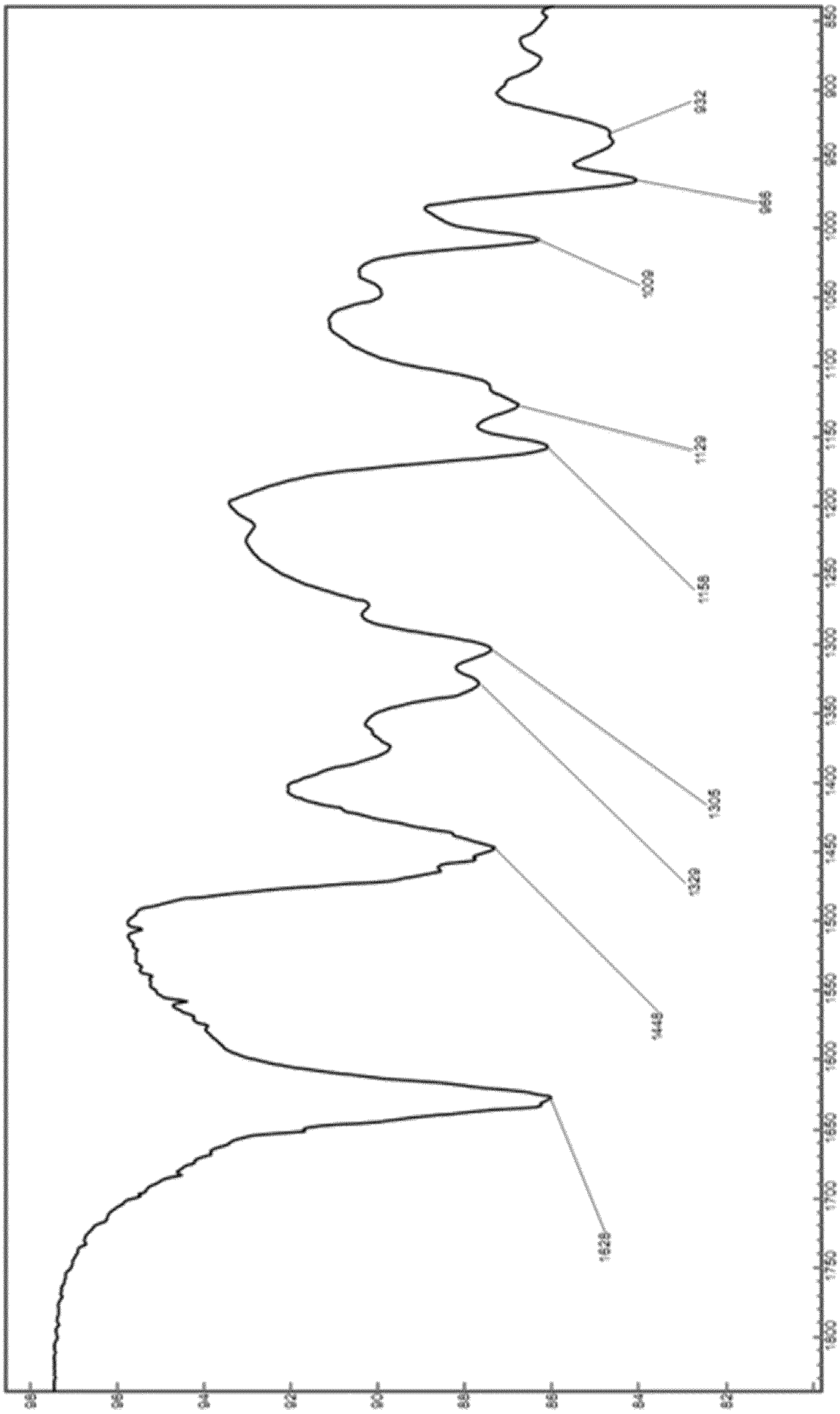


Wavenumber, $cm^{-1}$

Absorption units

FIG. 7

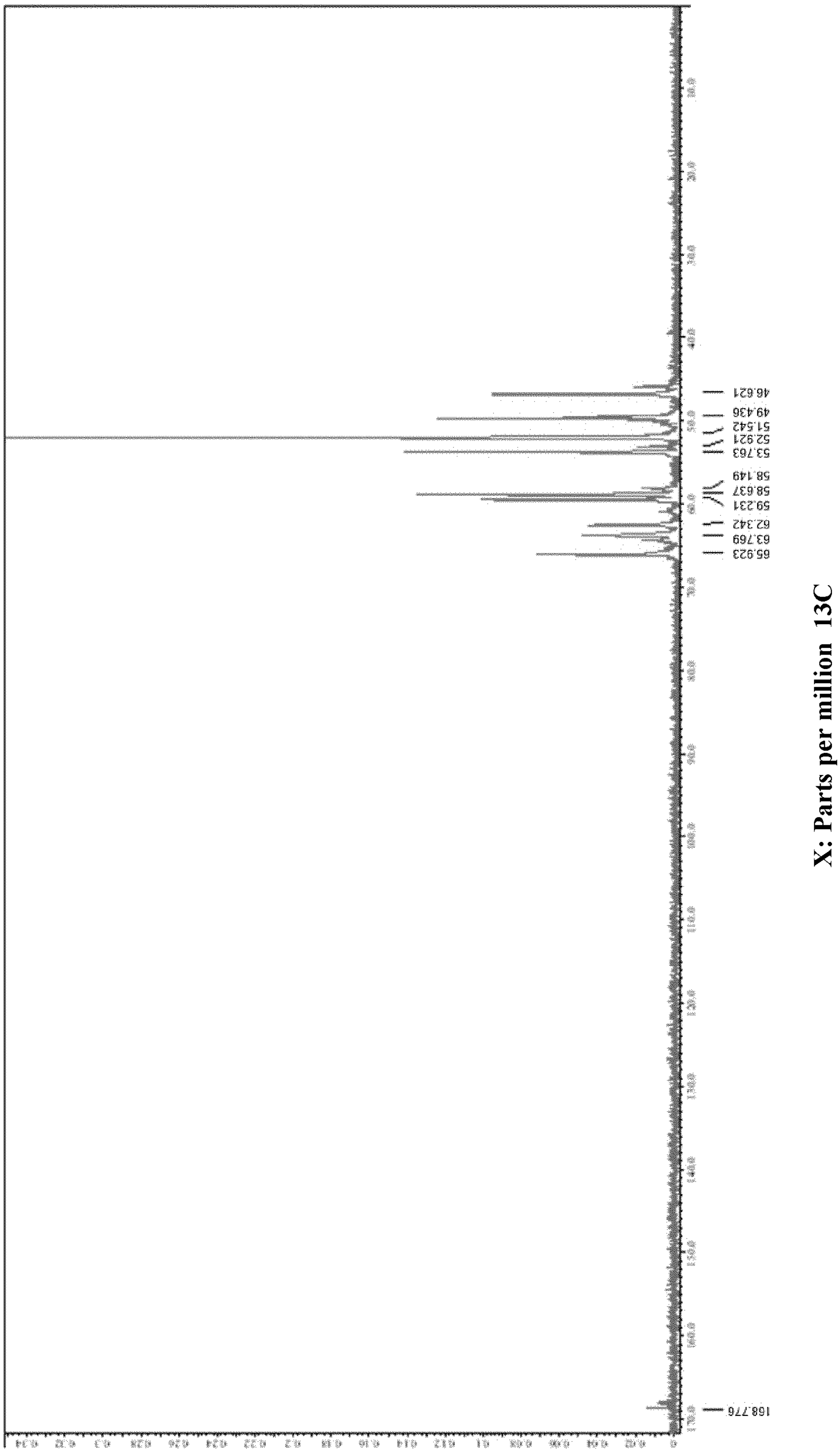
46.621
49.436
51.542
52.921
53.763
58.149
58.637
59.231
62.342
63.769
65.923
168.776
X: Parts per million 13C
Transmittance (%)

FIG.8

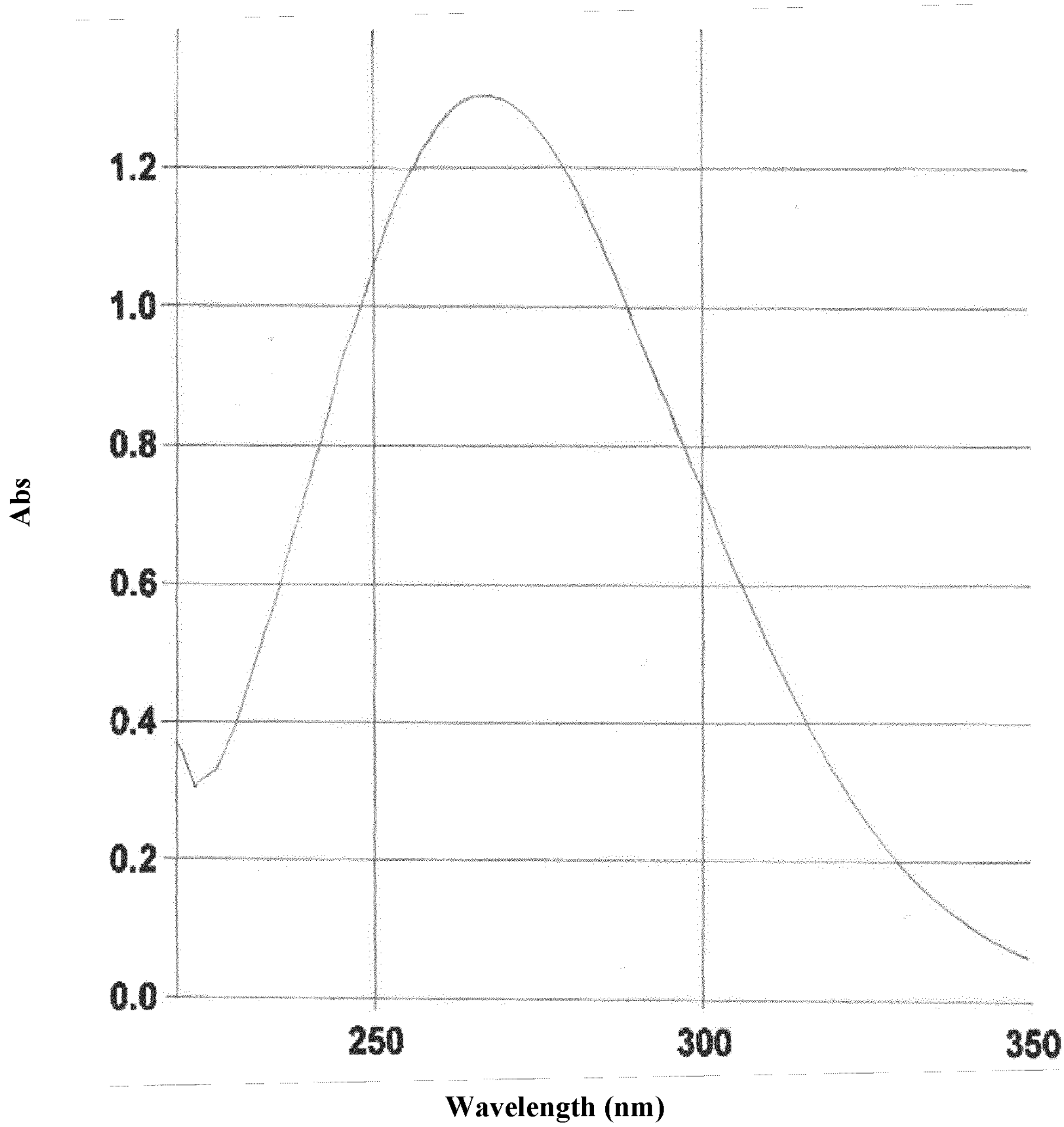


FIG. 9

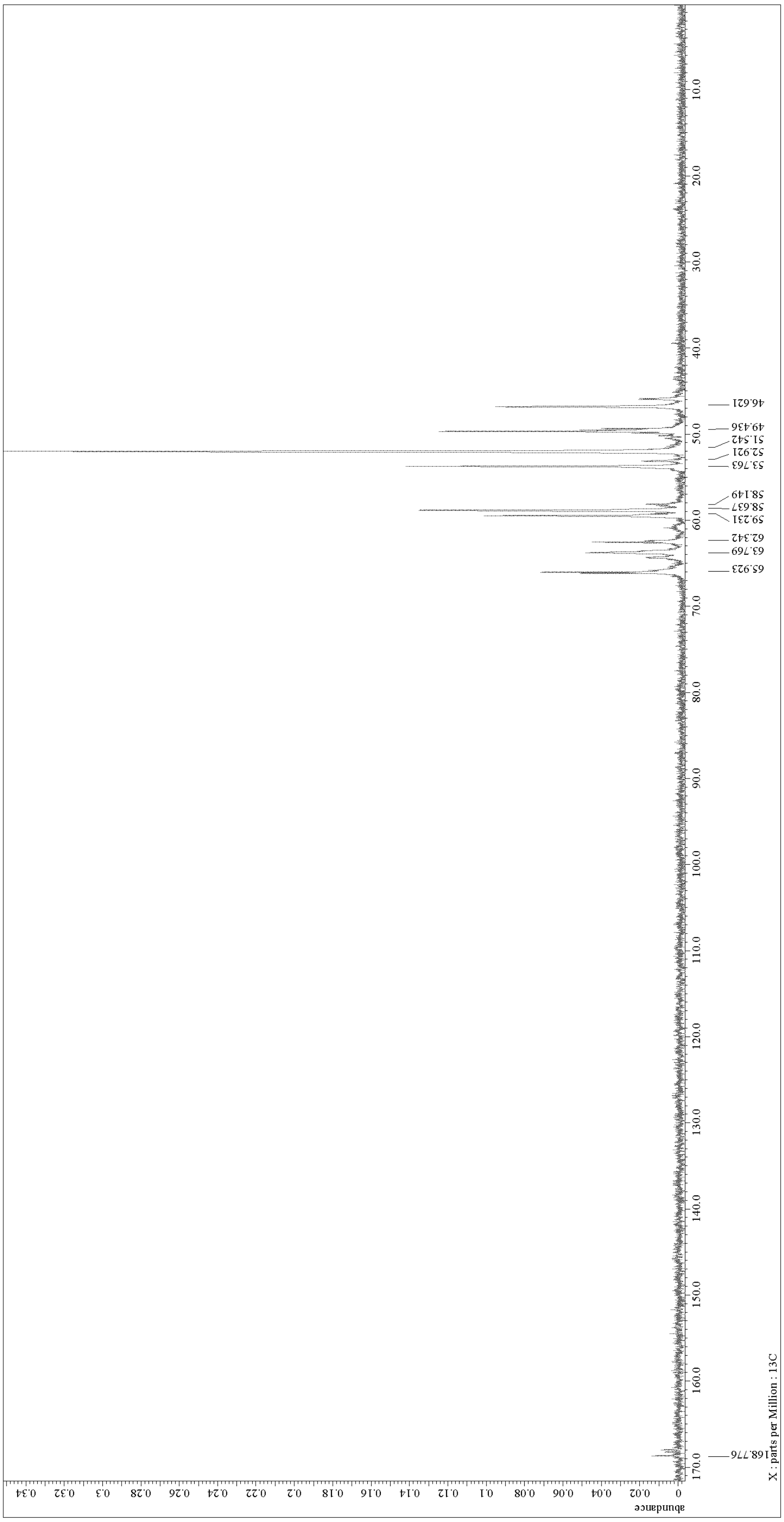

X: Parts per million 13C

Transmittance (%)

FIG.10

**INTERNATIONAL SEARCH REPORT**

International application No.
PCT/RU 2020/000692

A. CLASSIFICATION OF SUBJECT MATTER

(see the supplemental sheet)

According to International Patent Classification (IPC) or to both national classification and IPC

B. FIELDS SEARCHED

Minimum documentation searched (classification system followed by classification symbols)

C08G, B02C, C08F, B01F

Documentation searched other than minimum documentation to the extent that such documents are included in the fields searched

Electronic data base consulted during the international search (name of data base and, where practicable, search terms used)

DWPI, EAPATIS, Espacenet, Google, PubMed, PatSearch, RUPTO, USPTO, PATENTSCOPE

C. DOCUMENTS CONSIDERED TO BE RELEVANT

| Category* | Citation of document, with indication, where appropriate, of the relevant passages | Relevant to claim No. |
|---|---|---|
| X | US 2012/0053314 A1 (KLAUS S PREUSS), 01.03.2012, abstract, [0001] -[0002], [0007]-[0008], [0016], [0047] | 1 |
| A | RU 2185388 C2 (KARAPUTADZE TEMURI MUSAEVICH et al.), 20.07.2002 | 2-9, 18-19 |
| X | US 3165482 AI (E.I. DU PONT DE NEMOURS AND COMPANY), 12.01.1965, column 1 lines 65-73, column 2 lines 5-16, claim 2, example I | 10-11 |
| A | | 12, 15-17, 20 |
| X | RU 2073031 C1 (INSTITUT IMMUNOLOGII MINZDRAVMEDPROMA RF), 10.02.1997, abstract, p. 3 left hand column lines 1-18, right column lines 21-27, the claims, table I (examples 15-17), examples 1, 3 | 11, 13-14, 21, 22 25 |
| X | | 14, 22, 26, 28, 29 |
| A | EP 1108738 A2 (PETROVAX, INC.), 20.06.2001, fig. 2, fig. 3, claim 5 | 23-24, 27 |

☐ Further documents are listed in the continuation of Box C. ☐ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 24 May 2021 (24.05.2021) | 08 July 2021 (08.07.2021) |
| Name and mailing address of the ISA/ | Authorized officer |
| Facsimile No. | Telephone No. |

Form PCT/ISA/210 (second sheet) (July 1998)

INTERNATIONAL SEARCH REPORT

International application No.
PCT/RU 2020/000692

A. CLASSIFICATION OF SUBJECT MATTER

***C08G 73/00*** (2006.01)
***C08G 73/06*** (2006.01)
***B02C 21/00*** (2006.01)
***C08F 8/06*** (2006.01)
***B01F 13/00*** (2006.01)
***B01F 13/06*** (2006.01)
***C08F 8/02*** (2006.01)
***B02C 23/06*** (2006.01)
***C08F 4/00*** (2006.01)
***C08G 73/02*** (2006.01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2185388 A


### Non-patent literature cited in the description


- **P.J. HENDRA ; D.B. POWELL.** The infrared and Raman spectra of piperazine. *Spectrochimica Acta,* 1962, vol. 15, 299-306
- **P.J. HENDRA ; D.B. POWELL.** The infrared spectra and structures of metal complexes of 1,4-dioxan, 1,4-dithian, 1,4-thioxan, piperazine and 1,4-dimethylpiperazine. *J. Chem. Soc.,* 1960, vol. N12, 5105-5112
- **NEKRASOV A.V. ; PUCHKOVA N.G. et al.** Synthesis and properties of polymeric aliphatic N-oxides. *Vysokomolekulyarnye soedineniya,* 1980, vol. XXII (6), 1281-1285
- **SUN M. ; ZIGMAN S.** An improved spectrophotometric assay for superoxide dismutase based on epinephrine autoxidation. *Anal Biochem.,* 1978, vol. 90 (1), 81-89